# EUROPÄISCHE PATENTSCHRIFT

(11) **EP 3 615 386 B1**
(45) Veröffentlichungstag und Bekanntmachung des Hinweises auf die Patenterteilung: **03.03.2021**
(21) Anmeldenummer: 18719838.7
(22) Anmeldetag: 23.04.2018
(51) Int. Cl.: B60R 21/262, B60R 21/264

(54) **GENERATOR, GASSACKMODUL, FAHRZEUGSICHERHEITSSYSTEM UND VERFAHREN ZUM REINIGEN EINES PYROTECHNISCH ERZEUGTEN GASES**
GENERATOR, AIRBAG MODULE, VEHICLE SAFETY SYSTEM AND METHOD FOR PURIFYING A PYROTECHNICALLY PRODUCED GAS
GÉNÉRATEUR, MODULE À COUSSIN GONFLABLE, SYSTÈME DE SÉCURITÉ POUR VÉHICULE ET PROCÉDÉ DE PURIFICATION D'UN GAZ PRODUIT PAR PYROTECHNIQUE

(30) Priorität: 25.04.2017 DE 102017108798
(43) Veröffentlichungstag der Anmeldung: 04.03.2020
(73) Patentinhaber: ZF Airbag Germany GmbH, 84544 Aschau a. Inn (DE)
(72) Erfinder: BENDEL, Elmar, 83278 Traunstein (DE); ESAU, Anja, 84453 Mühldorf am Inn (DE); LAST, Detlef, 84453 Mühldorf am Inn (DE); JUNG, Christian, 84453 Mühldorf am Inn (DE); WEI, Ning, 86048 Augsburg (DE)
(74) Vertreter: ZF Patentabteilung - DIPS
(86) Internationale Anmeldenummer: PCT/EP2018/060258
(87) Internationale Veröffentlichungsnummer: WO 2018/197369

(56) Entgegenhaltungen:
- WO-A1-97/34784
- WO-A2-2005/058645
- WO-A2-2006/130848
- WO-A2-2007/005824

## Beschreibung

Die Erfindung betrifft einen Gasgenerator, insbesondere einen pyrotechnischen Rohrgasgenerator, gemäß Patentanspruch 1. Des Weiteren betrifft die Erfindung ein Gassackmodul und ein Fahrzeugsicherheitssystem.

In Gasgeneratoren für Fahrzeugsicherheitssysteme entstehen bei einer Umsetzung bzw. Verbrennung von pyrotechnischen Sätzen heiße Gase, welche in den Gasgeneratoren in der Regel durch ein Durchströmen von Drahtgestricken oder Drahtgeweben oder Bandwickeln oder Streckmetall-Schichten gekühlt werden. Zudem werden mit den genannten Bauteilen bei der Verbrennung entstehende Schlackereste bzw. Feststoffe aus den heißen Gasen gefiltert bzw. abgeschieden. Aufgrund der hohen Strömungsgeschwindigkeiten der heißen Gase innerhalb eines Gasgenerators sind die Abscheideraten für Feststoffe allerdings äußerst niedrig. Außerdem wird die Gastemperatur, insbesondere durch die hohe Masse der vorgenannten Bauteile (Drahtgewebe, Drahtgestricke etc.), schnell gesenkt, wodurch die Verbrennungsreaktionen in der Brennkammer bzw. im Gasraum verschlechtert werden kann. Dies könnte Gaswerte der heißen Gase, welche gewisse Konzentrationen nicht überschreiten sollten, ungünstig beeinflussen.

Aus der Druckschrift WO 2007/005824 A2 ist ein Gasgenerator gemäß dem Oberbegriff des Anspruchs 1 bekannt, der eine axiale Längsrichtung hat, eine Anzündeinheit und eine der Anzündeinheit axial nachgelagerte Brennkammer mit einem Brennkammerboden und eine der Brennkammer axial nachgelagerte Filterkammer umfasst, wobei in der Filterkammer ein Plattenlabyrinthfilter-System mit mindestens zwei einander axial nachgelagert positionierten Platten ausgebildet ist, wobei die Platten im Wesentlichen senkrecht zur axialen Längsrichtung des Gasgenerators und im Wesentlichen parallel zum Brennkammerboden ausgerichtet sind, und wobei jede der Platten zumindest eine Durchtrittsöffnung aufweist, wobei die Durchtrittsöffnungen zweier benachbarter Platten in Radialrichtung zueinander versetzt angeordnet sind.

An einem derartigen bekannten Gasgenerator ist von Nachteil, dass eine Kühlwirkung des Plattenlabyrinthfilter-Systems für ein heißes Gas, das im Funktionsfall des Gasgenerators innerhalb des Gasgenerators gekühlt werden soll, relativ gering ist und/oder ein derartiger Gasgenerator einen relativ großen radial nach außen erstreckenden Bauraum hat.

Die Aufgabe der vorliegenden Erfindung ist es, einen weiterentwickelten Gasgenerator mit einem Filter anzugeben, der zumindest einen der vorhergenannten Nachteile überwindet.

Außerdem soll ein weiterentwickeltes Gassackmodul und Fahrzeugsicherheitssystem angegeben werden.

Erfindungsgemäß wird diese Aufgabe im Hinblick auf den Gasgenerator, insbesondere auf einen pyrotechnischen Gasgenerator, durch den Gegenstand des Patentanspruches 1, im Hinblick auf das Gassackmodul durch den Gegenstand des Patentanspruches 8, im Hinblick auf das Fahrzeugsicherheitssystem durch den Gegenstand des Patentanspruches 9gelöst.

Vorteilhafte und zweckmäßige Ausgestaltungen des erfindungsgemäßen Gasgenerators sind in den Unteransprüchen angegeben.

Der erfindungsgemäße Gasgenerator betrifft insbesondere einen Gasgenerator für ein Fahrzeugsicherheitssystem, insbesondere für ein Airbagsystem. Insbesondere betrifft der erfindungsgemäße Gasgenerator einen pyrotechnischen Rohrgasgenerator. Mit dem Begriff Rohrgasgenerator ist hier insbesondere gemeint, dass das Außengehäuse des Gasgenerators in der Form eines Rohrs ausgebildet ist, wobei die Länge des Rohrs größer als der Durchmesser des Rohrs ist.

Der Gasgenerator umfasst eine Anzündeinheit, eine der Anzündeinheit axial nachgelagerte Brennkammer mit einem Brennkammerboden und eine der Brennkammer axial nachgelagerte Filterkammer. Zudem umfasst der Gasgenerator eine mittige Längsachse und eine dazu parallele axiale Längsrichtung, die ausgehend von der Anzündeinheit in Richtung der Filterkammer gerichtet ist. Die Anzündeinheit, die Brennkammer, der Brennkammerboden und die Filterkammer können somit, in dieser genannten Reihenfolge, in Richtung der axialen Längsrichtung des Gasgenerators, vorteilhaft koaxial zueinander ausgerichtet, angeordnet sein. Zudem ist in der Filterkammer ein Plattenlabyrinthfilter-System mit mindestens zwei einander axial nachgelagert positionierten Platten ausgebildet, wobei die Platten im Wesentlichen senkrecht zur axialen Längsrichtung des Gasgenerators und im Wesentlichen parallel zum Brennkammerboden ausgerichtet sind, und jede der Platten weist zumindest eine Durchtrittsöffnung auf, wobei die Durchtrittsöffnungen zweier benachbarter Platten in Radialrichtung zueinander versetzt angeordnet sind.

Erfindungsgemäß bildet der Brennkammerboden einen Brennkammerausgang und der Brennkammerausgang hat zumindest eine Öffnung im Brennkammerboden, wobei zwischen einer in axialer Längsrichtung ersten angeordneten Platte des Plattenlabyrinthfilter-Systems und einer Innenseite eines Filterkammeraußengehäuses mehrere Strömungskanäle gebildet sind

Die Öffnung im Brennkammerboden kann eine zentrale Öffnung sein und ist vorzugsweise als eine Öffnung mit kreisrundem Querschnitt ausgebildet. Der Brennkammerausgang ist insbesondere derart ausgebildet, dass lediglich ein einziger in die Filterkammer eintretender Gasstrom ausgebildet wird.

Die mindestens zwei einander axial nachgelagert positionierten Platten bilden somit eine axiale Labyrinth-Umlenkung.

Die in axialer Längsrichtung des Gasgenerators erste Platte des Plattenlabyrinthfilter-Systems weist beispielsweise eine flügelradartige Form auf. Des Weiteren ist es möglich, dass diese erste Platte eine im Wesentlichen kreisrunde Form mit davon seitlich abstehenden Kreissegmentabschnitten aufweist. Das in die Filterkammer einströmende Gas trifft somit zunächst in der Mitte auf die Platte auf. Aufgrund der Abschnitte bzw. Kreissegmentabschnitte wird die Platte in der Filterkammer befestigt.

Insbesondere können die mehreren Strömungskanäle zwischen flügelartigen Abschnitten oder Kreissegmentabschnitten der ersten Platte ausgebildet sein, die in Relation zum Brennkammerausgang radial nach außen verlagert sind. Die Anzahl der Strömungskanäle entspricht vorzugsweise der Anzahl der flügelartigen Abschnitte oder Kreissegmentabschnitte.

Vorzugsweise weist der mittlere Abschnitt der Platte, insbesondere der kreisrunde Abschnitt der ersten Platte einen größeren Durchmesser bzw. einen größeren Querschnitt als die zentrale Öffnung des Brennkammerbodens auf. Das in die Filterkammer einströmende Gas kann somit nicht direkt in die Strömungskanäle strömen sondern prallt zunächst auf dem mittleren Abschnitt bzw. dem im Wesentlichen kreisrunden Abschnitt der Platte auf. Der Gasstrom wird demnach zunächst um mindestens 90° abgelenkt. Anschließend strömt das Gas in die genannten Strömungskanäle. Die zweite Platte des Plattenlabyrinthfilter-Systems kann ringförmig ausgebildet sein. Der Ring bewirkt, dass die aus den Strömungskanälen austretenden Gasströme zunächst auf dem Ringabschnitt der zweiten Platte auftreffen und ein zweites Mal um 90° abgelenkt werden. Die zweite Ablenkung erfolgt im Wesentlichen senkrecht zur axialen Längsrichtung, in Richtung der mittigen Längsachse des Gasgenerators.

Anschließend kann der Gasstrom durch die im Filterkammeraußengehäuse ausgebildeten radialen Öffnungen aus dem Gasgenerator austreten.

Insbesondere kann bei einer nicht erfindungsgemäßen Ausführung eines Gasgenerators in der Filterkammer mindestens eine Leithülse und eine Prallplatte ausgebildet sein, wobei ein erstes brennkammerseitiges Ende der Leithülse dem Brennkammerboden axial nachgelagert ist und ein zweites Ende der Leithülse der Prallplatte zugeordnet ist, wobei an der Prallplatte und der Leithülse ein erster Umlenkabschnitt ausgebildet ist, der einen Gasfluss zu einer Außenseite der Leithülse in eine ringförmige Abströmkammer gestattet.

Der Gasgenerator umfasst im Wesentlichen mindestens drei Bauteilgruppen, wobei es sich bei diesen Bauteilgruppen um eine Anzündeinheit, eine Brennkammer sowie um eine Filterkammer handelt. Die Brennkammer ist dabei zwischen der Anzündeinheit und der Filterkammer ausgebildet. Aufgrund eines Brennkammerausgangs wird eine Fluidverbindung zwischen der Brennkammer und der Filterkammer hergestellt. Der Brennkammerausgang ist durch einen Brennkammerboden bzw. in dem Brennkammerboden in Form einer Öffnung bzw. eines Durchbruchs gebildet. Hierbei kann der Brennkammerboden vor einer Aktivierung des Gasgenerators im Bereich des Brennkammerausgangs verschlossen sein, beispielsweise durch eine sogenannte Verdämmung, welche in Form einer Metallfolie aus Aluminium, Stahl oder Kupfer ausgebildet sein kann. Bei dem Brennkammerboden kann es sich um eine Platte bzw. um ein plattenartiges Element handeln.

In der der Brennkammer axial nachgelagerten Filterkammer kann mindestens eine Leithülse und mindestens eine Prallplatte ausgebildet sein. Als ein axial nachgelagertes Element ist ein entlang der axialen Längsrichtung des Gasgenerators, ausgehend von der Anzündeinheit hin in Richtung der Filterkammer, nachfolgender Abschnitt bzw. eine nachfolgende Baugruppe zu verstehen. Die zueinander nachgelagerten Elemente sind zueinander funktional nachfolgend angeordnet. D.h., dass die Elemente oder Bauteile in Strömungsrichtung des bei Aktivierung des Gasgenerators erzeugten oder zu erzeugenden Gases nacheinander angeordnet bzw. ausgebildet sind.

Unter Strömungsrichtung ist hier die Richtung des Weges zu verstehen, entlang dessen das Gas, bzw. das durch einen Abbrand von Pyrotechnik erzeugbare Gas, ab Aktivierung des Gasgenerators bis hin zum Verlassen, also Ausströmen, des Gases aus dem Gasgenerator innerhalb des Gasgenerators entlang strömt. Hierbei sind etwaige diffuse Strömungen/Teilströmungen bzw. Verwirbelungen zu vernachlässigen; d.h. es handelt sich bei der Strömungsrichtung um eine Hauptströmungsrichtung des Gases, entlang derer der hauptsächliche Anteil eines Gasstroms bzw. eines abzweigbaren Teilgasstroms strömt.

Ein erstes brennkammerseitiges Ende der Leithülse ist dem Brennkammerboden axial nachgelagert. Hierbei kann das erste brennkammerseitige Ende der Leithülse den Brennkammerboden direkt kontaktieren, also auf diesem aufliegen, wobei es aber auch denkbar ist, dass zwischen Leithülse und Brennkammerboden noch ein oder mehrere weitere Bauteile positioniert sind, wie beispielsweise ein dämpfendes Element. Die Leithülse kann also sowohl direkt als auch indirekt auf dem Brennkammerboden aufliegen.

Die Leithülse weist zudem ein zweites Ende auf, das der Prallplatte zugeordnet ist. Dabei kann das zweite Ende der Leithülse vorteilhaft in Richtung der Prallplatte, vorzugsweise stirnseitig gelagerten Prallplatte, ausgerichtet bzw. angeordnet sein.

Die Leithülse leitet im Aktivierungszustand des Gasgenerators ein in die Filterkammer einströmbares bzw. einströmendes Gas zur Prallplatte. Vorzugsweise wird das gesamte in die Filterkammer einströmende Gas zur Prallplatte geleitet.

An der Prallplatte und der Leithülse ist ein erster Umlenkabschnitt ausgebildet, der einen Gasfluss zu einer Außenseite der Leithülse in eine ringförmige erste Abströmkammer gestattet.

Es kann also das Gas nach einem Einleiten in die Filterkammer, in Form eines Gasflusses zunächst im Innenbereich der Leithülse in axialer Längsrichtung zu der Prallplatte hin geleitet werden, um an bzw. durch den ersten Umlenkabschnitt zwischen der Prallplatte und dem zweiten Ende der Leithülse in die ringförmige erste Abströmkammer umgelenkt zu werden. Bei dieser Umlenkung strömt das Gas von dem Innenbereich der Leithülse durch den ersten Umlenkabschnitt in einen Außenbereich der Leithülse, also von einer Innenseite der Leithülse, um das zweite Ende der Leithülse herum, zu der Außenseite der Leithülse.

Der erste Umlenkabschnitt kann dabei eine Strömungsrichtungsumkehr des Gases (im Wesentlichen) um 180° zur Einströmrichtung des Gases bewirken. Mit anderen Worten wird das in die Filterkammer einströmende Gas im Wesentlichen bis zur Prallplatte geleitet, um dort in entgegengesetzte Richtung, d.h. in zur Einströmungsrichtung entgegengesetzten Richtung, umgelenkt zu werden.

Des Weiteren kann die Filterkammer mindestens einen dem ersten Umlenkabschnitt in Strömungsrichtung nachgelagerten weiteren Umlenkabschnitt aufweisen, der (im Wesentlichen) eine 90°-Umlenkung des Gases bewirkt. Als in Strömungsrichtung nachgelagerter weiterer Umlenkabschnitt ist ein derartiger Umlenkabschnitt zu verstehen, der von dem zunächst um 180° zur Einströmrichtung umgelenkten Gas zeitlich nachgelagert von dem in Strömung befindlichen Gas erreicht wird. Es ist möglich, dass die Filterkammer mehrere weitere Umlenkabschnitte aufweist, die im Wesentlichen jeweils mindestens eine 90°-Umlenkung des Gases bewirken.

Die Leithülse ist vorzugsweise konzentrisch innerhalb eines Filterkammeraußengehäuses angeordnet. Vorzugsweise ist die Leithülse länger, insbesondere um ein Vielfaches länger, als der Durchmesser der Leithülse.

Der Gasgenerator beruht insbesondere auf dem Gedanken, dass der Gasstrom des in der Brennkammer erzeugbaren bzw. erzeugten Gases in die Filterkammer strömt und Schlackebestandteile aufweisen kann, wobei der Gasstrom zunächst in die Filterkammer einströmt und die Filterkammer entlang ihrer axialen Länge im Wesentlichen ganz durchströmt. Dieses axiale Durchströmen der Filterkammer wird aufgrund der Leithülse bewirkt. An einer vorzugsweise stirnseitigen Prallplatte der Filterkammer, die einen ersten Umlenkabschnitt bildet, wird das Gas bzw. der Gasstrom um 180° umgelenkt. Daraufhin wird das Gas bzw. der Gasstrom durch zumindest einen weiteren Umlenkabschnitt nochmals umgelenkt, und zwar um weitere 90°. Anschließend kann das Gas in den Umgebungsbereich des Gasgenerators gelangen. Bei dem Umgebungsbereich handelt es sich beispielsweise um einen zu füllenden Gassack.

Die Prallplatte kann ein von der Leithülse separates, insbesondere beabstandetes, Bauteil sein und vorzugsweise einen Abschnitt eines Außengehäuses des Gasgenerators bilden, wobei vorzugsweise in der Prallplatte eine Vertiefung, insbesondere ein Sackloch, ausgebildet ist. In der Vertiefung, insbesondere in dem Sackloch, kann sich vorteilhaft durch die abrupte Abbremsung und Umlenkung des Gases Schlacke ablagern. Bei der Vertiefung bzw. dem Sackloch kann es sich demnach um eine Schlackefalle handeln. Optional kann ein Filter zwischen der Prallplatte und der Leithülse positioniert sein, wobei der Filter insbesondere an einem inneren Endbereich einer zweiten Hülse, der einem brennkammerseitigen Ende der Leithülse abgewandt ist, anliegen kann. Bei einem solchen Filter kann es sich um einen Filterkörper aus Metall, insbesondere Edelstahl oder Schwarzstahl, handeln, der vorzugsweise als Drahtgewebe oder Drahtgestrick vorliegt. Hierbei kann der Filter einen einzelnen Draht oder eine Vielzahl von Drähten, auch mit unterschiedlichen Durchmessern, umfassen, wobei der Filter zudem als vorgepresster Körper vorliegen kann. Ein derartiger Filter ist hinsichtlich seines Volumens und/oder seiner Masse geringer ausgebildet als vergleichsweise bekannte Filterkörper von pyrotechnischen Gasgeneratoren.

Der Vorteil bzw. die technische Wirkung des Filters ist in Kombination des Filters mit einer davon separaten Filterwirkung des Systems umfassend die Leithülse und die Prallplatte mit Umlenkabschnitt zu sehen. In anderen Worten, optimiert der Filter die Filterwirkung des Systems aus Leithülse und Prallplatte mit Umlenkabschnitt hinsichtlich Gaskühlung und Partikelfilterung, ohne jedoch die oben genannten Nachteile von massiven, insbesondere großen und schweren, Drahtgestricken oder Drahtgeweben, wie sie in pyrotechnischen Gasgeneratoren bekannt sind, mit sich zu bringen. Anders ausgedrückt, vermag der Filter eine gewisse geringe Restfilterung bzw. Restkühlung zusätzlich zu dem System aus Leithülse und Prallplatte mit Umlenkabschnitt zu leisten, um eine gewisse Feinjustierung bezüglich Filterung in dem Gasgenerator zu ermöglichen, ohne den Einsatz eines massiven Filters aus Drahtgestrick oder Drahtgewebe.

Des Weiteren ist es besonders vorteilhaft, die Leithülse ohne radiale Öffnungen auszubilden. Mit anderen Worten ist die Leithülse vorzugsweise frei von radialen Öffnungen. Dies ermöglicht es, den Gasstrom nach Eintritt in die Filterkammer komplett durchzubeschleunigen bzw. auszurichten und zu beschleunigen, bis der Gasstrom auf der Prallplatte auftrifft. Aufgrund des Ausbildens einer durchgängigen Hülsenwandung der Leithülse können keine radialen Teilgasströme abgezweigt werden. In einer weiteren Ausführungsform ist es möglich, dass ausgehend vom Brennkammerboden zumindest die vordere Hälfte, insbesondere mindestens die vorderen zwei Drittel, der Leithülse frei von radialen Öffnungen ist/sind. Demnach können in der vom Brennkammerboden wegweisenden Hälfte radiale Öffnungen ausgebildet sein. Besonders bevorzugt sind lediglich im hinteren, d.h. vom Brennkammerboden wegweisenden, Drittel der Leithülse radiale Öffnungen ausgebildet.

Die Leithülse ist vorzugsweise derart ausgebildet, dass der Gasstrom bzw. das in die Filterkammer einströmende Gas direkt auf die Vertiefung, insbesondere das Sackloch, gerichtet wird. Dadurch können Schlackebestandteile des Gases besonders effizient und optimiert abgelagert bzw. abgeschieden werden.

Insbesondere bei Ausführungsformen der Filterkammer, die lediglich eine einzige Hülse, nämlich die Leithülse, aufweisen, ist es möglich, dass zumindest im hinteren Drittel der Leithülse radiale Öffnungen ausgebildet sind.

Zur Befestigung der Leithülse in der Filterkammer, insbesondere am Brennkammerboden, kann das brennkammerseitige Ende der Leithülse einen von der Hülsenwand senkrecht abstehenden Befestigungsflansch aufweisen. Vorzugsweise ist die Leithülse derart mit dem Brennkammerboden verbunden, dass kein Gas im Verbindungsbereich zwischen dem brennkammerseitigen Ende der Leithülse und dem Brennkammerboden austreten kann. Vielmehr wird das in die Filterkammer gesamte einströmende Gas in Richtung des zweiten Endes der Leithülse geleitet.

Der Brennkammerausgang kann als eine zentrale Öffnung im Brennkammerboden ausgebildet sein. Bei einer zentralen Öffnung handelt es sich vorzugsweise um eine Öffnung mit kreisrundem Querschnitt. Des Weiteren ist es zusätzlich oder alternativ möglich, dass der Brennkammerausgang als eine Anordnung mehrerer, insbesondere nierenförmiger, Langlöcher ausgebildet ist. Diese Langlöcher sind vorzugsweise um die Mitte des Brennkammerbodens verteilt angeordnet. Vorzugsweise befinden sich die Langlöcher auf einer gemeinsamen Kreislinie.

In einer weiteren Ausführungsform kann in der Leithülse ein schneckenförmiges Drallblech ausgebildet sein, wobei sich das schneckenförmige Drallblech vom Bereich des Brennkammerausgangs in Richtung der Prallplatte, vorzugsweise diese kontaktierend, erstreckt. Das schneckenförmige Drallblech bewirkt, dass sich das in die Filterkammer einströmende Gas in axialer Richtung an der Oberfläche des Drallblechs entlang bewegt, wodurch Partikel besser abgeschieden werden können und eine effektivere Kühlung des Gases bewirkt werden kann. Mit anderen Worten wirkt das schneckenförmige Drallblech nach dem Prinzip eines Fliehkraftabscheiders. Die Partikel werden dabei insbesondere an der Innenwand der Leithülse abgeschieden. Außerdem bewirkt das schneckenförmige Drallblech eine Abkühlung des Gases. Die Geschwindigkeit des Gases bzw. des Gasstroms wird hierbei jedoch nicht (relevant) verlangsamt. Mit anderen Worten prallt auch bei Ausbildung eines schneckenförmigen Drallbleches der Gasstrom bzw. das Gas auf die vorzugsweise stirnseitige Prallplatte, so dass eine Strömungsrichtungsumkehr des Gases im Wesentlichen um 180° zur Einströmrichtung erfolgt.

Die vorzugsweise stirnseitige Prallplatte kann beispielsweise als Bodenelement eines becherartig oder topfartig geformten Stirnelements ausgebildet sein. Vorzugsweise ist bei einer derartigen Ausbildung der Prallplatte die Seitenwand des becherartig oder topfartig geformten Stirnelements in Richtung der Leithülse bzw. in Richtung des Brennkammerbodens ausgerichtet.

In einer weiteren Ausführungsform kann die Prallplatte als stirnseitiger Endabschnitt des Gasgeneratorgehäuses ausgebildet sein. Demnach ist es möglich, dass der stirnseitige Endabschnitt des Gasgeneratorgehäuses und somit der stirnseitige Endabschnitt der Filterkammer einen Bestandteil des ersten Umlenkabschnitts bildet. Eine Vertiefung, insbesondere ein Sackloch kann in diesem Fall im stirnseitigen Endabschnitt des Gasgeneratorgehäuses bzw. der Filterkammer ausgebildet sein.

In einer weiteren Ausführungsform kann die Prallplatte als in ein zweites Ende der Leithülse integrierter Abschnitt ausgebildet sein. Eine derartige Ausführungsform der Erfindung besteht vorteilhafterweise aus wenigen Einzelteilen.

In einer weiteren Ausführungsform kann das zweite Ende der Leithülse einen ringförmigen Abschnitt aufweisen. Der ringförmige Abschnitt kann in einer ersten Ausführungsform von der Leithülsenlängsachse wegweisend ausgebildet sein. Mit anderen Worten steht ein Ringabschnitt senkrecht von der Hülsenwandung der Leithülse ab. Eine derartige Ausbildung eines ringförmigen Abschnittes ermöglicht beispielsweise die Befestigung des zweiten Endes der Leithülse an der Prallplatte.

In einer weiteren Ausführungsform kann der ringförmige Abschnitt in Richtung der Leithülsenlängsachse weisen. Dadurch können beispielsweise zwischen der Prallplatte und dem ringförmigen Abschnitt Hinterschnitte ausgebildet werden. Derartige Hinterschnitte verstärken den Effekt der Ablagerung von Partikelteilen des Gasstroms.

In einer weiteren Ausführungsform kann der erste Umlenkabschnitt, abweichend von dem weiter oben beschriebenen Prinzip, eine Gasfluss zurück in einen inneren Bereich der Leithülse gestatten.

Es kann also hier das Gas nach einem Einleiten in die Filterkammer zunächst im Innenbereich der Leithülse in axialer Längsrichtung zu der Prallplatte hin geleitet werden, um an dem ersten Umlenkabschnitt an der Prallplatte wieder zurück in den Innenbereich der Leithülse geleitet werden, entsprechend einer 180-Grad Rückumlenkung des Gasstroms. Der so umgelenkte Gasstrom kann erst danach aus dem Innenbereich der Leithülse über einen weiteren Umlenkabschnitt zu einer Außenseite der Leithülse, vorzugsweise in eine erste ringförmige Abströmkammer, weitergeleitet werden.

Die Leithülse kann im Querschnitt die Form eines Sterns mit Strahlen radial auswärts gerichtet aufweisen. Des Weiteren ist es möglich, dass die Leithülse einen zentralen Abschnitt mit im Wesentlichen kreisrunden Querschnitt mit den Querschnitt vergrößernden Ausbuchtungen aufweist. Insbesondere können drei oder vier solcher Ausbuchtungen vorgesehen sein. Die Ausbuchtungen können insbesondere einen im Wesentlichen rechteckigen Querschnitt aufweisen. Aufgrund eines derartigen Querschnitts mit den Querschnitt vergrößernden Ausbuchtungen kann eine Filterkammer in Art eines radialen Labyrinths gebildet werden. Dabei sind in den Ausbuchtungen bzw. in den die Ausbuchtungen bildenden Seitenwänden mehrere in axialer Richtung verlaufende Langlöcher ausgebildet. Nachdem das Gas von der Prallplatte abgeprallt ist und im Wesentlichen um 180° zur Einströmungsrichtung umgelenkt wurde, kann das Gas durch diese Langlöcher abströmen. Vorzugsweise strömt das Gas anschließend entlang der Innenseite des Filterkammeraußengehäuses in Richtung der Brennkammer und anschließend durch in dem Filterkammeraußengehäuse ausgebildeten Öffnungen nach außen.

Bei Ausbildung eines derartigen Querschnitts der Leithülse ist somit eine dreidimensionale Umlenkung um 180° bis 270° möglich. Vorzugsweise ist eine derartige Leithülse derart in einem Filterkammeraußengehäuse ausgebildet, so dass zwischen den vergrößernden Ausbuchtungen der Leithülse voneinander separierte Abströmkammern gebildet werden. Die Anzahl der Abströmkammern entspricht der Anzahl der vergrößernden Ausbuchtungen. Das durch die (Lang)Löcher der Leithülse austretende Gas strömt somit in eine zwischen den Ausbuchtungen gebildete Abströmkammer. In der Abströmkammer kann das Gas expandieren.

Bei der Ausbildung einer Leithülse mit dem beschriebenen Querschnitt hinsichtlich vergrößernder Ausbuchtungen ist es vorteilhaft, in der Filterkammer eine Verdrehsicherung auszubilden. Die Verdrehsicherung soll eine Verdrehung der Leithülse innerhalb des Filterkammeraußengehäuses unterbinden. Beispielsweise ist es möglich, am brennkammerseitigen Ende oder am gegenüberliegenden Ende der Filterkammer zwischen den Ausbuchtungsabschnitten der Leithülse nierenförmige Elemente auszubilden, die eine Verdrehung der Leithülse innerhalb des Filterkammeraußengehäuses unterbinden.

Es ist möglich, dass die Filterkammer eine zweite Hülse umfasst, die im Wesentlichen konzentrisch um die Leithülse angeordnet ist. Die zweite Hülse weist mehrere radiale Öffnungen auf. Vorzugsweise sind die radialen Öffnungen der zweiten Hülse in der zur Brennkammer weisenden vorderen Hälfte, insbesondere in dem zur Brennkammer weisenden vorderen Drittel, ausgebildet. Die zweite Hülse kann an einem oder an beiden Enden einen ringförmigen Befestigungsflansch aufweisen. Des Weiteren ist es möglich, dass der Befestigungsflansch der zweiten Hülse nach innen oder nach außen weist.

Zusätzlich oder alternativ ist ein brennkammerseitiges Ende der zweiten Hülse vom Brennkammerboden und von der Leithülse beabstandet, wobei insbesondere die Leithülse mit dem Brennkammerboden einstückig ausgebildet ist oder diese kontaktiert und/oder die zweite Hülse mit der Prallplatte einstückig ausgebildet ist oder diese kontaktiert.

Demnach ist es also möglich, dass der Brennkammerboden mit der Leithülse zusammen ein einziges Bauteil und/oder die Prallplatte zusammen mit der zweiten Hülse ebenfalls ein einziges Bauteil ausbildet. Dies hat den Vorteil einer Reduzierung von Einzelbauteilen für den Gasgenerator.

Der beschriebene mindestens weitere Umlenkabschnitt kann beispielsweise als in der hinteren Hälfte, insbesondere im hinteren Drittel, der Leithülse ausgebildete Öffnung ausgebildet sein. In einem derartigen Fall weist die Filterkammer vorzugsweise keine zweite Hülse auf. Mit "hinteren Hälfte" ist dabei diejenige Hälfte der Leithülse gemeint, welche sich von dem Brennkammerboden weiter weg, näher zu der Prallplatte hin, befindet. Des Weiteren ist es möglich, dass der weitere Umlenkabschnitt zwischen dem brennkammerseitigen Ende der zweiten Hülse und dem Brennkammerboden ausgebildet ist. In diesem Fall berührt bzw. kontaktiert nämlich die zweite Hülse nicht den Brennkammerboden, sondern es ist ein Abstand zwischen diesen beiden Bauteilen gegeben, welcher die Ausbildung eines Spaltes zwischen diesen Bauteilen bewirkt, welcher als der weitere Umlenkabschnitt wirken kann. Zudem kann der weitere Umlenkabschnitt als radiale Öffnung in der zweiten Hülse oder als radiale Öffnung in einem Filterkammeraußengehäuse ausgebildet sein.

Zudem ist es möglich, dass eine zweite ringförmige Abströmkammer zwischen der zweiten Hülse und einem bzw. dem Filterkammeraußengehäuse ausgebildet ist, wobei eine bzw. die im Filterkammeraußengehäuse ausgebildete radiale Öffnung in axialer Längsrichtung beabstandet vom brennkammerseitigen Ende der zweiten Hülse und von jeder etwa in der zweiten Hülse ausgebildeten radialen Öffnung angeordnet ist. Dies bedeutet, dass der Gasstrom, nachdem er in die zweite Abströmkammer eingeströmt ist, noch eine gewisse axiale Strecke in der zweiten Abströmkammer zurücklegen muss, bevor er diese über die im Filterkammeraußengehäuse ausgebildete radiale Öffnung, in Richtung Gasgeneratorumgebung, verlassen kann. Dadurch kann der Gasstrom noch weiter abgekühlt und/oder hinsichtlich Partikelablagerung gefiltert werden.

Bei Ausbildung lediglich einer Leithülse wird zwischen dem Filterkammeraußengehäuse und der Leithülse lediglich eine Abströmkammer ausgebildet. Diese Abströmkammer kann auch aus mehreren radial voneinander getrennten Abschnitten bestehen. Bei der Ausbildung einer zweiten Hülse in der Filterkammer werden mindestens zwei Abströmkammern gebildet. Die zweite Abströmkammer umgibt dabei die erste Abströmkammer. Auch die zweite Abströmkammer kann aus mehreren, radial voneinander getrennten, Abschnitten bestehen.

Beim Durchströmen bzw. Durchlaufen der Abströmkammer(n) bzw. von Spaltbereichen zwischen den Hülsen und dem Filterkammeraußengehäuse wird das Gas vorzugsweise erneut beschleunigt und mehrmals um jeweils 90° umgelenkt. Dabei werden weitere Feststoffpartikel in Totbereichen der Gasströmung, also in Bereichen mit deutlich reduzierter Geschwindigkeit von Gasströmung, und an den Hülsenwandungen bzw. an der Innenseite des Filterkammeraußengehäuses abgeschieden. Die genannten Spaltbereiche können zwischen der Leithülse und dem Filterkammeraußengehäuse bzw. zwischen der Leithülse und der zweiten Hülse bzw. zwischen der zweiten Hülse und dem Filterkammeraußengehäuse ausgebildet sein. Aufgrund des in der gesamten Filterkammer bestehenden hohen Drucks und aufgrund der hohen Temperaturen können auch Werte bzw. Konzentrationen von unvorteilhaften Gasen bzw. Gaszusammensetzungen reduziert werden.

Ein weiterer Vorteil ist, dass die Leithülse und ggf. die zweite Hülse ein geringeres Gewicht als bekannte Drahtgestrickfilter aufweisen und kostengünstiger sind. Aufgrund der geringeren Masse muss für eine gleiche Kannenleistung bzw. Leistung des Gasgenerators weniger Treibstoff verwendet bzw. gezündet werden. Die Gasgeneratorlänge kann somit reduziert werden.

Des Weiteren wird die Streuung der Leistung des Gasgenerators reduziert. Dies zeigt sich bei Messungen mittels einer bekannten Messmethode für die Leistung von Gasgeneratoren (Leistungsmessung in einer genormten Messkanne). Dort konnte die Streuung bei der sogenannten Kannenleistung reduziert werden, da die Strömungsquerschnitte durch kleine Toleranzen der Leithülse und ggf. der zweiten Hülse reproduzierbarer sind als der statistisch verteilte durchströmte Drahtquerschnitt bei einem bekannten Drahtgestrickfilter. Somit steigt die Systemrobustheit bei einem Gasgenerator.

Die kompakte Anordnung der Leithülse sowie der ggf. zweiten Hülse ermöglicht die Verwendung solcher Hülsen in Gasgeneratoren mit einem Außendurchmesser von 20 mm.

Es ist möglich, dass die Leithülse mehrere axial verlaufende, d.h. parallel zur axialen Längsrichtung des Gasgenerators, verlaufende Nasen bzw. Vertiefungen aufweist. Diese axial verlaufenden Nasen bzw. Vertiefungen sind vorzugsweise auf den Umfang der Leithülse (gleichmäßig) verteilt. Derartig axial verlaufende Nasen/Vertiefungen dienen zur Lageerkennung der montierten Leithülse innerhalb des Filterkammeraußengehäuses. Die Nasen bzw. Vertiefungen können aufgrund von im Filterkammeraußengehäuse ausgebildeten Öffnungen erkannt werden.

Im Filterkammeraußengehäuse sind mindestens zwei Öffnungen, insbesondere mindestens zwei Langlöcher, ausgebildet. Hierbei verteilt sich die von Gas durchströmbare Fläche dieser Öffnungen im Wesentlichen gleichmäßig radial über den Umfang des Gasgenerators bzw. des Filterkammeraußengehäuses. Dies dient der Schubneutralität des Gasgenerators.

Für alle vorgenannten Ausführungsformen des erfindungsgemäßen Gasgenerators gilt, dass dabei in der Brennkammer auch ein Brennkammersieb angeordnet sein kann, welches der Filterkammer axial, bezügliche der Längsrichtung des Gasgenerators, vorgelagert ist, wobei das Brennkammersieb vorzugsweise hülsenartig mit radialen Öffnungen ausgebildet ist. Ein solches Brennkammersieb, das auch die Form eines hohlen Pyramidenstumpfes haben kann, dient einer gewissen Vorfilterung des Gases bzw. Gasstroms schon innerhalb der Brennkammer, bevor das Gas bzw. der Gasstrom in die Filterkammer eingeleitet wird. Hierbei ist es insbesondere möglich, dass die Bauteile Anzündeinheit, Brennkammersieb, Brennkammerboden, Leithülse, gegebenenfalls eine zweite Hülse und die Prallplatte, vorzugsweise in der genannten Reihenfolge, entlang der mittigen Längsachse bzw. in axialer Längsrichtung des Gasgenerators, vorteilhaft in konzentrischer Ausrichtung, positioniert sind.

Im Rahmen eines nebengeordneten Aspekts beruht die Erfindung auf dem Gedanken, ein Gassackmodul mit einem vorbeschriebenen erfindungsgemäßen Gasgenerator, einem von dem Gasgenerator aufblasbaren Gassack und einer Befestigungseinrichtung zur Anbringung des Gassackmoduls an einem Fahrzeug anzugeben. Es ergeben sich ähnliche Vorteile, wie diese bereits im Zusammenhang mit dem erfindungsgemäßen Gasgenerator angegeben sind.

Im Rahmen der vorliegenden Erfindung wird außerdem ein Fahrzeugsicherheitssystem, insbesondere zum Schutz einer Person, beispielsweise eines Fahrzeuginsassen oder Passanten, mit einem vorbeschriebenen erfindungsgemäßen Gasgenerator, einem von diesem aufblasbaren Gassack, als Teil eines Gassackmoduls, und einer elektronischen Steuereinheit, mittels der der Gasgenerator bei Vorliegen einer Auslösesituation aktivierbar ist angegeben. Bei dem Fahrzeugsicherheitssystem kann es sich dabei um ein Fahrer-, Beifahrer-, Seiten-, Knie- oder Fenster-Airbag, oder ein Passantenschutzsystem wie z.B. ein Motorhaubenaufsteller für ein Fahrzeug handeln.

In Zusammenhang mit dem erfindungsgemäßen Fahrzeugsicherheitssystem ergeben sich ähnliche Vorteile, wie diese bereits im Zusammenhang mit dem erfindungsgemäßen Gasgenerator angegeben sind.

In einem weiteren Aspekt wird ein nicht erfindungsgemäßes Verfahren zum Reinigen eines pyrotechnisch erzeugten Gases in einem Gasgenerator, insbesondere einem pyrotechnischen Rohrgasgenerator angegeben. Das nicht erfindungsgemäße Verfahren umfasst dabei folgende Schritte:- Einleiten des Gases, insbesondere in Form eines Gasstroms, in eine Filterkammer entlang einer Einströmrichtung, die insbesondere parallel zu einer axialen Längsrichtung des Gasgenerators ausgerichtet ist,
- Umlenken von Teilen des Gases bzw. des Gasstroms an einer Prallplatte in eine im Wesentlichen entgegengesetzte Richtung,
- Erneutes Umlenken von Teilen des Gases bzw. des Gasstroms in eine im Wesentlichen radiale oder tangentiale Richtung bezogen auf die axiale Längsrichtung des Gasgenerators.

Indem zuerst das Gas, insbesondere in Form eines Gasstroms, entlang einer Einströmrichtung in die Filterkammer eingeleitet und danach Teile des Gases bzw. des Gasstroms an der Prallplatte in die im Wesentlichen entgegengesetzte Richtung umgelenkt werden, kann durch eine derartige 180-Grad Umlenkung des Gasstroms eine erste optimale Schlacke- bzw. Partikelablagerung aus dem Gas erfolgen, da die im Verhältnis zu den Gasmolekülen wesentlich schwereren Partikel abrupt an der Prallplatte abgebremst werden und sich dort vorteilhaft ablagern können.
Durch das weitere erneute Umlenken von Teilen des Gases bzw. des Gasstroms, nun in radialer oder tangentialer Richtung, kann erneut eine zusätzliche Schlacke- bzw. Partikelablagerung stattfinden.
Durch ein solches gezieltes und geführtes Lenken und Umlenken des Gasstroms kann eine wesentlich effektivere Filterung bzw. Kühlung des Gasstroms, insbesondere bezüglich Materialkosten, Gewicht und Bauraum, ermöglicht werden. Dies ist bei bekannten Filterbauteilen, beispielsweise Drahtwickeln oder Drahtmaschengestricken nicht möglich, da dort eine völlig diffuse, lokal äußerst unterschiedliche Umströmung bzw. Durchströmung dieser Bauteile vorliegt. Zu der hier verwendeten Begrifflichkeit "Umlenken von Teilen des Gases bzw. des Gasstroms" sei noch angemerkt, dass dies klarstellen soll, dass generell in einem Gasgenerator der vorliegenden Art nur in seltenen Fällen ein bzw. der gesamte Gasstrom in eine einzige wohldefinierte Richtung umgelenkt bzw. geleitet werden kann. Vielmehr wird es in der Praxis fast immer sich von einem Hauptgasstrom abzweigende gering ausgeprägte Teilabzweigungen des Gases bzw. Verwirbelungen oder Unstetigkeiten bezüglich des Hauptgasstroms geben.

Ergänzend zu dem vorgenannten Verfahren ist es möglich, dass ein oder mehrere der folgenden Schritte zusätzlich im Anschluss an das vorgenannte Verfahren ausgeführt werden:
- Vorfiltern des Gases vor dem Einleiten in die Filterkammer, insbesondere mittels eines Brennkammersiebs, vorzugsweise derart, dass das Gas in Einströmrichtung aus dem Brennkammersieb austritt. Dies hat den Vorteil, dass eine erste Partikel- bzw. Schlackeablagerung, insbesondere eine solche mit grober bzw. großen Korngröße, bereits in der Brennkammer vorgenommen wird, um die Filterkammer mit weniger zu filternden Stoffen zu beaufschlagen bzw. zu belasten.

- Erneutes Umlenken von Teilen des Gases in und/oder entgegen der Einströmrichtung. Durch dieses erneute Umlenken können wiederum Partikel- bzw. Schlacketeile aufgrund ihrer Masse bzw. Trägheit an geeigneten Stellen im Umgebungsbereich der Umlenkung, wie beispielsweise an der Leithülse oder der zweiten Hülse abgelagert werden.
- Umlenken von Teilen des Gases aus der Einströmrichtung und/oder der entgegengesetzten Richtung in eine radial nach außen gerichtete Richtung und Ausströmen durch Öffnungen in einem Filterkammeraußengehäuse.
- Umlenken von Teilen des Gases im Wesentlichen in Umfangsrichtung des Gasgenerators gleichzeitig mit oder zwischen einem Umlenken des Gases in oder aus der Einströmrichtung oder der dazu entgegengesetzten Richtung. Dieser Schritt kann im Wesentlichen zeitgleich bzw. zeitlich unmittelbar nach einem der vorgenannten Schritte, welche ein Umlenken von Teilen des Gases umfassen, durchgeführt werden. Dadurch wird quasi eine dreidimensionale Umlenkung des Gasstroms, die insgesamt axiale, radiale und tangentiale Richtungskomponenten umfassen kann ermöglicht. Der Vorteil dabei ist, dass das Gas bzw. der Gasstrom noch länger, zeitlich wie auch bezogen auf eine zurücklegbare Strecke des Gases, in dem Gasgenerator, insbesondere in einem relativ kleinen Bauraum des Gasgenerators, gehalten bzw. geführt werden kann, um eine gewünschte Abkühlung und Filterung des Gases auf optimale und kostensparende Weise zu erreichen.

Die Erfindung wird im Folgenden anhand von Ausführungsbeispielen unter Bezugnahme auf die beigefügten, schematischen Zeichnungen, näher erläutert.

Darin zeigen:
Fig. 1 eine Längsschnittansicht durch einen Gasgenerator gemäß einem ersten Ausführungsbeispiel;
Fig. 2a eine Längsschnittansicht durch einen Gasgenerator gemäß einer zweiten Ausführungsform;
Fig. 2b Ausführungsform einer Filterkammer nach Prinzip des Gasgenerators gemäß Fig. 2a mit einem zusätzlichen Filter;
Fig. 3 und 4 verschiedene Ausführungsformen hinsichtlich einer Filterkammer mit lediglich einer einzigen Leithülse;
Fig. 5a und 5b einen Längsschnitt sowie Querschnittdarstellung einer weiteren Ausführungsform einer Filterkammer;
Fig. 6 eine Darstellung eines Drallblechs;
Fig. 7a und 7b verschiedene Schnittdarstellungen eines erfindungsgemäßen Gasgenerators mit einem Plattenlabyrinthfilter-System; und
Fig. 8 eine Längsschnittansicht durch einen Teilbereich eines Gasgenerators gemäß einer weiteren Ausführungsform.

Im Folgenden werden für gleiche und gleichwirkende Bauteile und Elemente die gleichen Bezugsziffern verwendet.

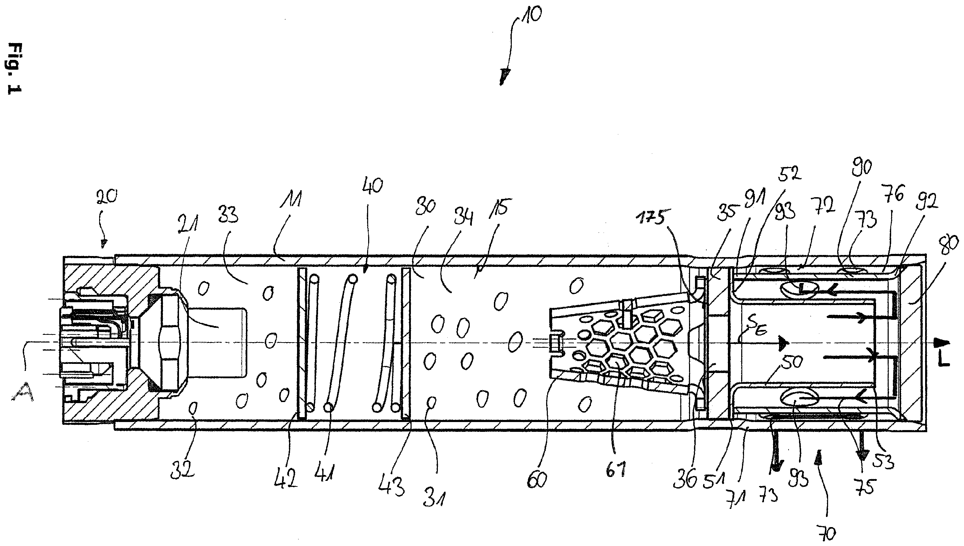

In Fig. 1 ist ein Gasgenerator 10 in Form eines langgestreckten Rohrgasgenerators gezeigt. Das Außengehäuse 11 hat eine Gesamtlänge, die mehr als das 4-fache, insbesondere mehr als das 8-fache, des Außendurchmessers beträgt. Konkret kann der Außendurchmesser des Außengehäuses (11) 20 mm und die Gesamtlänge des Außengehäuses (11) 80 mm - 160 mm betragen. An dem dargestellten linken Ende des Gasgenerators 10 ist eine Anzündeinheit 20 mit einem Anzünder 21 ausgebildet. Die Anzündeinheit 20 kann eine vorgefertigte, in sich geschlossene Einheit, sein. Der Gasgenerator 10 hat eine mittige Längsachse A und eine dazu parallele axiale Längsrichtung L. Hierbei ist die axiale Längsrichtung L ausgehend von der Anzündeinheit hin in Richtung der Filterkammer zu verstehen und durch ein entsprechendes Pfeilsymbol, hier in deckungsgleicher Lage mit der mittigen Längsachse A, gekennzeichnet.

An die Anzündeinheit 20 axial nachgelagert ist die Brennkammer 30 ausgebildet. In der Brennkammer 30 ist ein pyrotechnisches Festtreibstoffbett 31 sowie eine Anzündmischung 32 befindlich. Sowohl das Festtreibstoffbett 31 als auch die Anzündmischung 32 sind lediglich schemenhaft dargestellt. Das Festtreibstoffbett 31 besteht aus einer Schüttung einzelner Treibstofftabletten, kann aber auch in Form eines monolithischen Formkörpers oder in Form von aneinandergereihten Scheiben bzw. Ringen bestehen. Die Anzündmischung 32 besteht ebenfalls aus einer Schüttung einzelner pyrotechnischer Formkörper. Die dargestellten Lücken zwischen den einzelnen Treibstofftabletten bzw. den pyrotechnischen Formkörpern sind in einem verwirklichten Gasgenerator 10 nicht derart groß.

Die Anzündmischung 32 ist in einem ersten Abschnitt 33 der Brennkammer 30 angeordnet. Das Festtreibstoffbett 31 ist hingegen in einem zweiten Abschnitt 34 der Brennkammer 30 befindlich. Der erste Abschnitt 33 der Brennkammer 30 reicht von der Anzündeinheit 20 bis zu einem Füllkörperelement 40. Der zweite Abschnitt 34 der Brennkammer 30 ist als darauffolgender Abschnitt der Brennkammer 30 zu verstehen, der zwischen dem Füllkörperelement 40 und dem Brennkammerboden 35 ausgebildet ist.

Zwischen der Anzündmischung 32 und dem Festtreibstoffbett 31 ist das Füllkörperelement 40 bewegbar angeordnet. Das Füllkörperelement 40 ist nicht mit der Innenseite 15 des Außengehäuses 11 verbunden. Es ist möglich, dass das Füllkörperelement 40 zumindest abschnittsweise an der Innenseite 15 des Außengehäuses 11 anliegt. Allerdings ist das Füllkörperelement 40 nicht an die Innenseite 15 des Außengehäuses 11 fixiert.

In Fig. 1 wird der Gasgenerator 10 in einem Ruhezustand, d.h. in einem nichtaktivierten Zustand, dargestellt. Der Anzünder 21 ist demnach noch nicht gezündet. Das Füllkörperelement 40 ist im Ruhezustand des Gasgenerators 10 derart zwischen der Anzündmischung 32 und dem Festtreibstoffbett 31 angeordnet, dass das Füllkörperelement 40 die Anzündmischung 32 und das Festtreibstoffbett 31 in ihren Lagen fixiert. Das Füllkörperelement 40 gleicht Befüll-Toleranzen bei der Herstellung des Gasgenerators (10), insbesondere dort bei der Pyrotechnik-Befüllung, aus.

Das Füllkörperelement 40 ist federnd ausgebildet und weist mehrere Bauteile auf. Im dargestellten Beispiel umfasst das Füllkörperelement 40 eine Feder 41. Die Feder 41 ist als Schraubenfeder ausgebildet und weist stirnseitige Abschlusselemente 42 und 43 auf. Die dargestellten Abschlusselemente 42 und 43 sind scheibenartig ausgebildet und weisen Öffnungen auf, so dass das Füllkörperelement 40 im Funktionsfall des Gasgenerators 10 von Gas durchströmbar ist.

Der Brennkammerausgang 36 der Brennkammer 30 wird durch den Brennkammerboden 35 und die darin ausgebildete Öffnung gebildet. Die Öffnung ist zentral ausgebildet und weist einen kreisförmigen Querschnitt auf. Vor dem Brennkammerboden 35 bzw. auf dem Brennkammerboden 35 aufliegend ist ein Brennkammersieb 60 ausgebildet. Das Brennkammersieb 60 ist in Form eines Kegels bzw. eines hohlen Pyramidenstumpfes ausgebildet und weist mehrere Brennkammersieböffnungen in axialer und radialer Richtung auf, die von Gas durchströmbar sind. Große Partikel des Festtreibstoffbettes 31 werden aufgrund des kegelförmigen Brennkammersiebs 60 zurückgehalten und gelangen somit nicht durch die Öffnung 36 in die Filterkammer 70. Zwischen dem Brennkammersieb 60 und dem Brennkammerboden 35 ist eine Verdämmung 175 an dem Brennkammerboden 35 fixiert, vorzugsweise auf diesen aufgeklebt. Die Verdämmung 175 verschließt somit im Ruhezustand des Gasgenerators 10 die in dem Brennkammerboden 35 ausgebildete Öffnung und ist in Form einer Metallfolie aus Aluminium, Stahl oder Kupfer ausgebildet. Nach Aktivierung des Gasgenerators 10 wird die Verdämmung 175 aufgrund des in der Brennkammer 30 durch Abbrand des Festtreibstoffbetts 31 entstehenden Drucks geöffnet bzw. zerstört und gibt somit die Öffnung in dem Brennkammerboden 35 für eine Gasdurchströmung frei.

In der Filterkammer 70 sind eine Leithülse 50 sowie ein Prallplatte 80 ausgebildet. Die Prallplatte 80 ist eine stirnseitige Prallplatte und verschließt im vorliegenden Ausführungsbeispiel die Filterkammer 70. Die Prallplatte 80 ist hierbei auch zugleich der stirnseitige Endabschnitt des Generatorgehäuses 11. Das brennkammerseitige Ende 51 der Leithülse 50 liegt im dargestellten Beispiel direkt auf dem Brennkammerboden 35 auf. Hierzu weist das brennkammerseitige Ende 51 einen ringförmigen Befestigungsflansch 52 auf. Aufgrund der Leithülse 50 wird das in die Filterkammer 70 einströmende Gas vollständig zur Prallplatte 80 geleitet. Die Prallplatte 80 bildet einen ersten Umlenkabschnitt, der eine Strömungsrichtungsumkehr des Gases im Wesentlichen um 180° zur Einströmungsrichtung S_{E} des Gases bewirkt. Die Leithülse 50 weist keine radialen Öffnungen auf, so dass keine Teilströme des einströmenden Gases aus radialen Öffnungen der Leithülse 50 entweichen können.

Die Filterkammer 70 umfasst des Weiteren eine zweite Hülse 90 mit einem brennkammerseitigen Ende 91 und einer Stirnseite 92. Am brennkammerseitigen Ende 91 liegt die zweite Hülse 90 auf dem Befestigungsflansch 52 der Leithülse 50 auf. An der Stirnseite 92 ist die zweite Hülse 90 leicht nach außen gebogen und ist mit der Prallplatte 80 verbunden. Die zweite Hülse 90 weist mehrere Hülsenöffnungen 93 auf. Diese Hülsenöffnungen 93 bilden in Strömungsrichtung des Gases nachgelagerte weitere Umlenkabschnitte. Die weiteren Umlenkabschnitte bewirken im Wesentlichen eine weitere 90°-Umlenkung des Gases. Die Strömungsrichtung des Gases ausgehend von der Einströmrichtung S_{E} ist durch dicke Pfeile dargestellt. Zur besseren Darstellung der Abschnitte und Elemente der Hülsen 50 und 90 ist die Gasströmung lediglich in der unteren Hälfte der Filterkammer 70 dargestellt. Tatsächlich strömt das Gas auch in die obere Hälfte der Filterkammer 70 und aus den dortigen Filterkammeröffnungen 73 nach außen. Der Vollständigkeit halber sei angemerkt, dass eine Gasströmung und damit die zuvor beschriebene Darstellung der Gasströmungen (siehe Darstellung durch Pfeile) natürlich erst mit bzw. nach einer Aktivierung des Gasgenerators zum Tragen kommt.

Die Leithülse 50 ist in der zweiten Hülse 90 im Wesentlichen konzentrisch angeordnet. Zwischen der zweiten Hülse 90 und der Leithülse 50 wird eine erste ringförmige Abströmkammer 75 gebildet. Zwischen der zweiten Hülse 90 und dem Filterkammeraußengehäuse 71 wird eine zweite, ebenfalls im Wesentlichen ringförmige, Abströmkammer 76 ausgebildet.

In Fig. 1 ist das Innere der Filterkammer 70 im Wesentlichen aus den zwei ineinander positionierten Hülsen 50 und 90 gebildet, wobei die Leithülse 50 frei von radialen Öffnungen ist. Der Gasstrom wird somit nach Eintritt in die Filterkammer 70 komplett durchbeschleunigt, so dass dieser auf der Prallplatte 80 auftrifft. Aufgrund der unterschiedlich ausgebildeten Abströmkammern 75 und 76 wird das Gas zwischen der Leithülse 50 und der zweiten Hülse 90 sowie zwischen der zweiten Hülse 90 und dem Filterkammeraußengehäuse 71 erneut beschleunigt und mehrmals um 90° umgelenkt. Dabei werden Feststoffpartikel bzw. Schlackepartikel des Gasstroms in Totbereichen der Strömung und an den Wandungen der Hülsen 50 und 90 sowie an der Innenseite 72 des Filterkammeraußengehäuses 71 abgeschieden.

An der Prallplatte 80 wird der Gasstrom derart stark abgebremst, dass die in der Gasströmung enthaltenen heißen Feststoffe auf die Prallplatte 80 geschleudert werden und dort als Materialanhäufung liegen bleiben.

Durch die Filterkammeröffnungen 73 gelangt das derart gereinigte bzw. gefilterte Gas in die Umgebung des Gasgenerators 10, d.h. insbesondere in einen zu füllenden Gassack.

In anderen Worten ausgedrückt, ist die Idee mitunter, dass der Gasstrom bzw. Gasstromlinien in der Filterkammer 70 in Bezug auf die mittige Längsachse A des Gasgenerators 10 eine Kreuzungszahl von k>=3 aufweisen. Hierbei stellt allgemein die Kreuzungszahl k einer Kurve (hier der Verlauf des Gasstroms) in Bezug auf eine Gerade (hier die mittige Längsachse A des Gasgenerators 10) die Gesamtanzahl der 90° Schnittpunkte der Kurventangente(n) mit der Gerade dar.

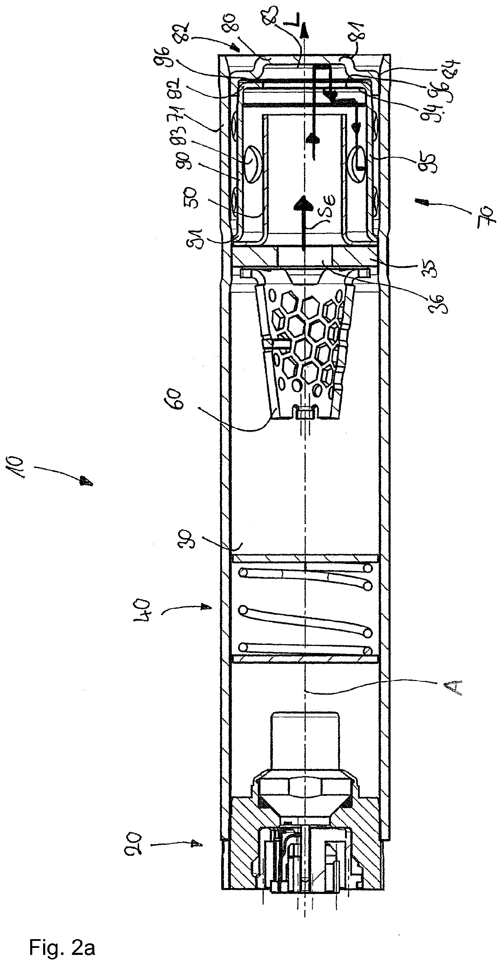

In Fig. 2a wird ein vom Grundaufbau mit dem Gasgenerator 10 der Fig. 1 vergleichbarer Gasgenerator 10 dargestellt. Im Folgenden werden lediglich die Unterschiede hinsichtlich der Filterkammer 70 näher erläutert.

Auch in Fig. 2a wird eine Filterkammer 70 mit zwei ineinander geschobenen im Wesentlichen konzentrisch angeordneten Hülsen 50 und 90 dargestellt. Die Konstruktion der Leithülse 50 entspricht der Leithülse 50 der Fig. 1. Die zweite Hülse 90 liegt am brennkammerseitigen Ende 91 auf der Leithülse 50 auf. Die Stirnseite 92 weist hingegen einen Ringabschnitt 94 auf. Der Ringabschnitt 94 steht im Wesentlichen 90° von der Hülsenwandung 95 ab. Der Ringabschnitt 94 weist in Richtung der mittigen Längsachse A des Gasgenerators 10.

In Fig. 2a ist die Prallplatte 80 als Bodenelement 81 eines becherartig geformten Stirnelements 82 ausgebildet. Die Wandung 84 des Stirnelements 82 umgreift dabei die Stirnseite 92, insbesondere den Ringabschnitt 94, der zweiten Hülse 90, so dass das becherartige Stirnelement 82 ausreichend befestigt ist. Zusätzlich weist die Prallplatte 80 eine Vertiefung 83 auf. Aufgrund dieser Vertiefung 83 kann der Prozess der Materialablagerungen (Feststoff- bzw. Schlackepartikel) des Gasstromes verstärkt werden. Aufgrund des Ringabschnitts 94 wird des Weiteren ein Hinterschnitt 96 gebildet, in dem weitere Feststoff-Partikel bzw. Schlackepartikel abgelagert werden können.

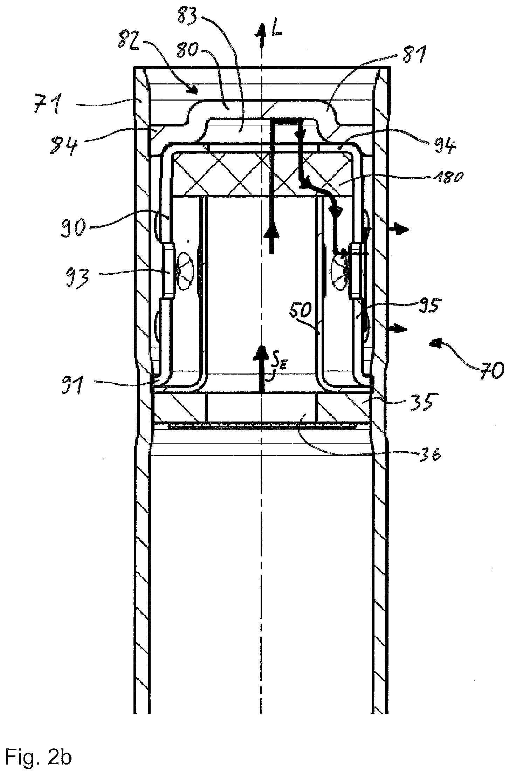

In Fig. 2b wird eine Ausführungsform einer Filterkammer nach Prinzip des Gasgenerators gemäß Fig. 2a dargestellt, mit dem wesentlichen Unterschied, dass nach der Konstruktion gemäß Fig. 2b ein zusätzlicher Filter 180 innerhalb der Filterkammer 70 vorhanden ist. Der Filter 180 ist derart zwischen der Prallplatte 80 und der Leithülse 50 positioniert, dass er im Wesentlichen orthogonal zur Einströmrichtung S_{E} des Gases, welches durch die Öffnung 36 in dem Brennkammerboden 35 in die Filterkammer 70 einströmen kann, angeordnet ist. Wie in Fig. 2b durch die Pfeillinien dargestellt, liegt der Filter 180 damit der Strömungsrichtung bzw. der Hauptströmungsrichtung des Gases sozusagen im Wege, nachdem das die Leithülse 50 durchströmende Gas das axiale, der Prallplatte 80 zugewandte, Ende der Leithülse 50 erreicht hat. Der Gasstrom des Gases wird jedoch nicht durch den Filter 180 abgelenkt, sondern setzt sich durch den Filter hindurch mit im Wesentlichen unveränderter Strömungsrichtung fort, bis er auf die Prallplatte 80 trifft und dort, wie nach dem Prinzip in Fig. 2a dargestellt, umgelenkt wird. Somit arbeitet auch die Konstruktion gemäß Fig. 2b ebenfalls nach dem Prinzip, dass die Prallplatte 80 eine Strömungsrichtungsumkehr des Gases im Wesentlichen um 180° zur Einströmrichtung S_{E} bewirkt. Nach dieser Umlenkung des Gasstroms an der Prallplatte 80 kann der Gasstrom, ebenfalls wieder durch den Filter 180 hindurch in Richtung Filterkammeraußengehäuse 71, nach dem Prinzip, wie auch in Fig. 2a dargestellt, geleitet werden.

Der Filter 180 stellt somit für den Gasstrom kein Hindernis dar, welches diesen völlig blockieren oder wesentlich umlenken würde, sondern bewirkt für das Gas lediglich eine gewisse den Filter 180 zu durchströmende Strecke, wobei das Gas hier einer zusätzlichen Kühlung und/oder Partikelfilterung unterworfen werden kann. Der Filter 180 besteht aus Metall und ist als Drahtgewebe oder Drahtgestrick ausgeführt und vorzugsweise, wie in Fig. 2b dargestellt, der Innenkontur des Ringabschnitts 94 der zweiten Hülse 90 angepasst und in den Bodenbereich bzw. in den Bereich des Ringabschnitts 94 der zweiten Hülse 90 eingesetzt bzw. eingepresst. Zu einer axialen Positionierung des Filters 180 in Richtung Brennkammerboden 35 stützt sich der Filter 180 an die ihm zugewandte Öffnung der Leithülse 50 ab.

Vereinfacht ausgedrückt, stellt die Konstruktion gemäß Fig. 2b im Wesentlichen dieselbe Konstruktion gemäß Fig. 2a dar, jedoch mit dem zusätzlichen Filter 180, durch welchen eine gewisse optimierte Restfilterung bzw. Restkühlung bewirkt werden kann, zusätzlich zu der Filterung bzw. Kühlung durch das System umfassend die Leithülse 50, die Prallplatte 80 mit deren Umlenkwirkung für die Gasströmung.

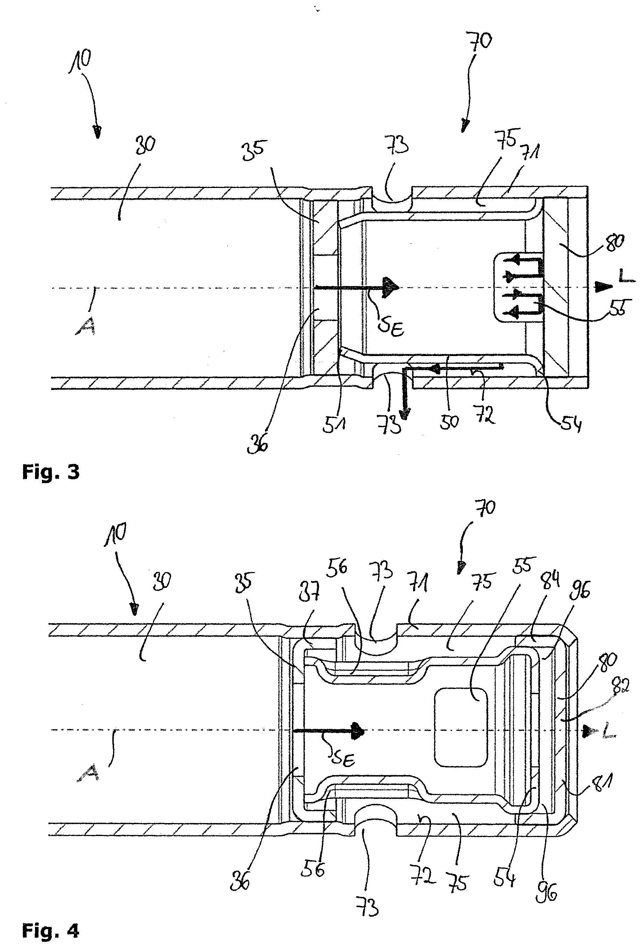

In Fig. 3 wird eine weitere Ausführungsform einer Filterkammer 70 dargestellt. Darin befindet sich lediglich eine einzige Leithülse 50. Die Leithülse 50 liegt am brennkammerseitigen Ende 51 wiederum auf dem Brennkammerboden 35 auf. Am zweiten Ende 53 der Leithülse 50 ist ein Ringabschnitt 54 ausgebildet. Im dargestellten Querschnitt weist die Leithülse 50 im Wesentlichen eine Tulpenform auf. Aufgrund des Ringabschnittes 54 kann eine Befestigung, insbesondere eine Verklemmung, der Leithülse 50 in der Filterkammer 70 insbesondere innerhalb des Filterkammeraußengehäuses 71 bewirkt werden.

Die dargestellte Prallplatte 80 bewirkt wiederum eine Strömungsrichtungsumkehr des Gases im Wesentlichen um 180° zur Einströmrichtung S_{E}. Der weitere Umlenkabschnitt ist im dargestellten Beispiel als in der Leithülse 50 ausgebildete Leithülsenöffnung 55 ausgebildet. Die Leithülsenöffnung 55 weist einen im Wesentlichen rechteckigen Querschnitt auf. Die Leithülsenöffnung 55 ist im Wesentlichen im letzten Drittel der Leithülse 50, d.h. in dem zur Prallplatte 80 weisenden Drittel der Leithülse 50 ausgebildet. Demnach gelangt trotz Ausbildung der Leithülsenöffnung 55 der größte Anteil des Gasstromes zur Prallplatte 80 und wird dort hinsichtlich der Strömungsrichtung umgelenkt.

Ein etwaiges Ausbilden von Teilgasströmen, die zu Beginn der Leithülse 50, also im Bereich deren brennkammerseitigen Endes 51, abströmen könnten, wird durch die dargestellte Ausbildung der Leithülse 50 vorteilhaft unterbunden. Zwischen der Leithülse 50 und dem Filterkammeraußengehäuse 71, insbesondere der Innenseite 72 des Filterkammeraußengehäuses 71, wird die erste Abströmkammer 75 gebildet. Das aus der Leithülse 50 ausströmende Gas strömt somit zunächst in Richtung der Brennkammer 30, um anschließend über die Filterkammeröffnungen 73 in die Umgebung zu gelangen.

Auch in Fig. 4 ist eine Filterkammer 70 dargestellt, die lediglich eine einzige Hülse, nämlich die Leithülse 50 umfasst. Ebenfalls dargestellt ist eine alternative Ausführungsform eines Brennkammerbodens 35. Der Brennkammerboden 35 weist nämlich einen Hülsenstutzen 37 auf, der in Richtung der Filterkammer 70 weist. Das brennkammerseitige Ende 51 der Leithülse 50 liegt wiederum auf dem Brennkammerboden 35 auf. Am zweiten Ende 53 der Leithülse 50 ist wiederum ein Ringabschnitt 54 ausgebildet, wobei dieser in Richtung der mittigen Längsachse A des Gasgenerators 10 weist.

Die Prallplatte 80 ist wiederum als Bodenelement 81 eines becherartig geformten Stirnelements 82 ausgebildet. Zwischen dem Ringabschnitt 54 der Leithülse 50 und der Wandung 84 des Stirnelements 82 wird wiederum ein Hinterschnitt 96 ausgebildet, in dem Partikel des Gasstroms abgelagert werden können. Nach entsprechender Strömungsrichtungsumkehr des Gases gelangt dieses ausgehend von der Prallplatte 80 durch die Leithülsenöffnungen 55 in die erste Abströmkammer 75. Die Abströmkammer 75 wird zwischen der Innenseite 72 des Filterkammeraußengehäuses 71 und der Leithülse 50 gebildet.

In der Leithülse 50 sind axial verlaufende Vertiefungen 56 ausgebildet. Die axial verlaufenden Vertiefungen 56 verlaufen parallel zur mittigen Längsachse A des Gasgenerators 10. Vorzugsweise sind mehrere derartige axiale Vertiefungen 56 ausgebildet. Diese Vertiefungen 56 dienen der Lageerkennung der montierten Leithülse 50. Die Vertiefungen 56 sind mit einem Durchblick durch die Filterkammeröffnungen 73 zu erkennen, beispielsweise durch ein geeignetes optisches System bei der Herstellung des Gasgenerators 10, durch welches die korrekte Lage der Leithülse 50 mittels der Orientierung der axialen Vertiefungen 56 feststellbar sind. In diesem Fall sind die Filterkammeröffnungen 73 vorzugsweise in Form von Langlöchern ausgebildet. Vorzugsweise sind mindestens zwei Langlöcher zur Erzielung einer Schubneutralität des Gasgenerators 10 ausgebildet.

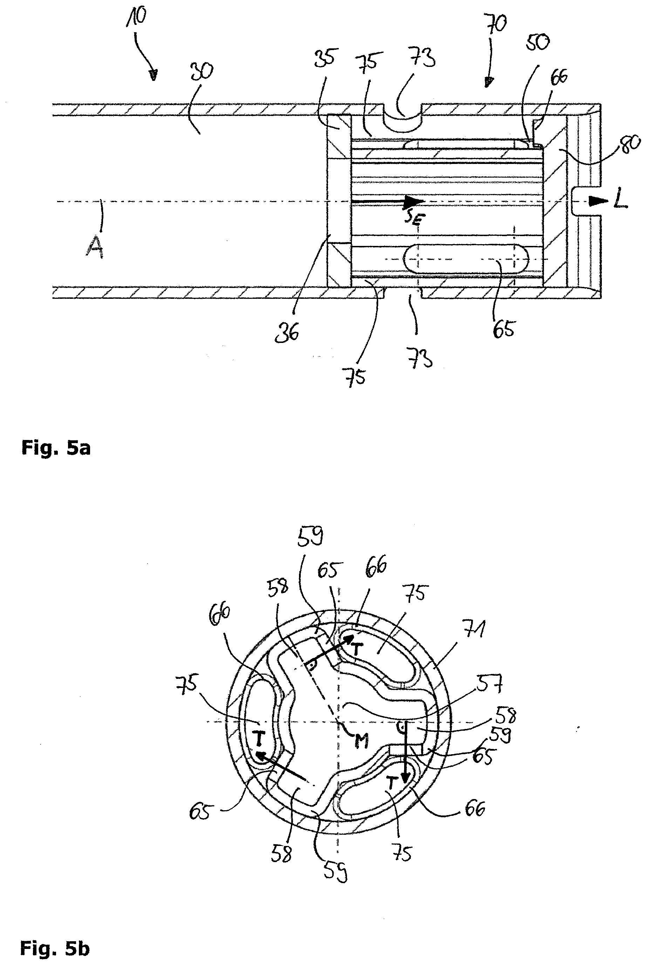

In den Fig. 5a und 5b ist die Filterkammer 70 in Art eines radialen Labyrinths ausgebildet. Es ist zu erkennen, dass wiederum lediglich eine einzige Leithülse 50 ausgebildet ist. Der Querschnitt der Leithülse 50 ist in Fig. 5b zu erkennen. Demnach weist die Leithülse 50 einen zentralen Abschnitt 57 mit einem kreisrunden Querschnitt, der einen Mittelpunkt M hat, auf, wobei des Weiteren Ausbuchtungen 58 zu erkennen sind, die den Querschnitt vergrößern. Die Ausbuchtungen 58 weisen einen im Wesentlichen rechteckigen, insbesondere einen im Wesentlichen quadratischen, Querschnitt auf. In jeweils einer Ausbuchtungswandung 59 einer Ausbuchtung 58 ist jeweils ein Langloch 65 ausgebildet, welches im Wesentlichen parallel zu der mittigen Längsachse A des Gasgenerators 10 ausgebildet ist.

Zwischen den Ausbuchtungen 58 ist jeweils eine erste Abströmkammer 75 ausgebildet. Die Abströmkammer 75 ist somit durch die Ausbuchtungen 58 in mehrere voneinander separierte Abschnitte unterteilt.

Nachdem das einströmende Gas an der Prallplatte um 180° umgelenkt wurde, gelangt das Gas durch die Langlöcher 65 der Ausbuchtungswandungen 59 in jeweils eine separierte erste Abströmkammer 75, in der das Gas expandieren kann. Anschließend kann das Gas aus der ersten Abströmkammer 75 durch die Filterkammeröffnungen 73 nach außen strömen. Im Detail verläuft hierbei der vorgenannte Weg bzw. die Umlenkung des Gases bzw. Gasstroms wie folgt. Zunächst strömt das Gas in Einströmrichtung S_{E}, also in axialer Längsrichtung L des Gasgenerators 10, in die Filterkammer 70 ein, um diese entlang ihrer im Wesentlichen gesamten Länge bis hin zu der Prallplatte 80 zu durchströmen. Dort findet dann eine Richtungsumkehr des Gasstroms, entgegen der Einströmrichtung S_{E} statt, wobei hier der Gasstrom zunächst noch im Inneren der Leithülse 50 geleitet wird, bis hin zu den Langlöchern 65, durch die der Gasstrom dann zu einer Außenseite der Leithülse 50, nämlich in die erste Abströmkammer 75 gelangen kann. Bei dem letzgenannten Abschnitt des Gasstoms durch die Langlöcher 65 findet eine abschnittsweise tangential gerichtete Führung bzw. Strömung des Gasstroms statt, was durch entsprechende Pfeilsymbole, welche diesen tangentialen Gasstrom T darstellen, in Fig. 5b angedeutet ist. Geometrisch kann dieser tangential gerichtete Gasstrom, bezogen auf die Querschnittsebene der Fig. 5b, wie folgt beschrieben werden.
Verbindet man gedanklich den Mittelpunkt M des zentralen Abschnitts 57 mit der Mitte einer Ausbuchtung 58 in radialer Richtung durch eine gedachte Linie (dargestellt durch eine gestrichelte Linie in Fig. 5b) und fällt man ein Lot von dieser gedachten Linie in Richtung des nächstgelegenen Langlochs 65, bzw. durch dieses Langloch 65 hindurch, so ergibt sich durch dieses Lot der tangentiale Gasstrom T bzw. dessen Richtung.
In anderen Worten ausgedrückt, findet im Bereich des tangentialen Gasstroms T zusätzlich zu den bisher beschriebenen axialen und radialen Gasumlenkungs- bzw. Gasumlenkungsstrecken auch eine tangential gerichtete Komponente statt, welche in diesem Bereich auch als eine im Wesentlichen parallel zu dem Umfang des Gasgenerators 10 bzw. als eine tangential zu dem Umfang der Filterkammer 71 verlaufende Gasströmung aufgefasst werden kann. Insgesamt lässt sich damit eine dreidimensionale Umlenkung des Gasstroms, die sowohl axiale, radiale als auch tangentiale Richtungskomponenten umfasst, erreichen.

In Fig. 5b sind des Weiteren nierenförmige Verdrehsicherungselemente 66 zu erkennen. Diese sind zwischen den Ausbuchtungen 58 ausgebildet und verhindern ein Verdrehen der Leithülse 50. Die Verdrehsicherungselemente 66 sind auf der Prallplatte 80 ausgebildet. Insbesondere sind die Verdrehsicherungselemente 66 und die Prallplatte 80 einteilig ausgebildet.

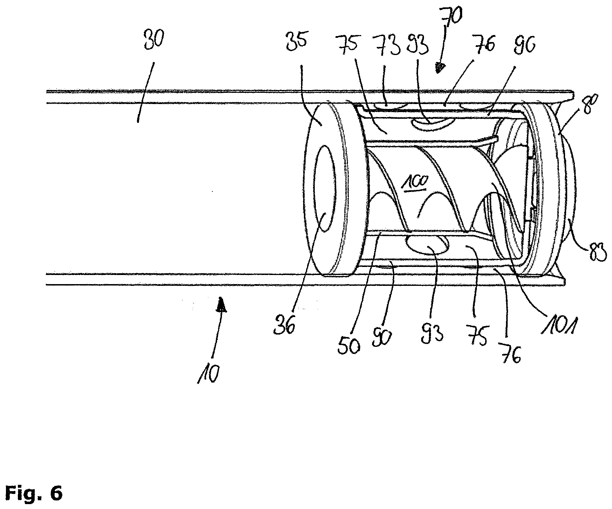

In Fig. 6 wird ein Teilbereich eines Gasgenerators 10, mit wiederum einer Filterkammer 70 mit zwei Hülsen, nämlich der Leithülse 50 und der zweiten Hülse 90, dargestellt. Zusätzlich weist diese Ausführungsform ein schneckenförmiges Drallblech 100 auf. Dieses erstreckt sich von der Brennkammeröffnung bzw. Brennkammerausgang 36 bzw. vom Brennkammerboden 35 bis zur Prallplatte 80. Der Gasstrom wird hier über die Oberfläche 101 des Drallbleches 100 geleitet. Mit anderen Worten bewegt sich der Gasstrom schraubenartig in Richtung der Prallplatte 80. Dadurch können Partikel des Gasstroms besser abgeschieden werden.

Das Drallblech 100 wirkt quasi wie ein Fliehkraftabscheider. Gleichzeitig wird das Gas abgekühlt. Die Geschwindigkeit des Gasstroms wird hier jedoch nicht stark verlangsamt. Die Partikel werden somit sowohl an der Innenseite der Leithülse 50 als auch an der Prallplatte 80 abgeschieden. Die weitere Ausführung der Filterkammer 70 entspricht im Wesentlichen den Ausführungsformen der Fig. 1 und 2.

Das Drallblech 100 soll eine ausreichend hohe Anzahl von Windungen aufweisen, wobei vorzugsweise die Anzahl der Windungen (Windungszahl w) mindestens einen Wert von 3 aufweist.

Im Allgemeinen stellt hierbei die Windungszahl w einer Kurve in Bezug auf einen Punkt z die Anzahl der Umrundungen entgegen der Uhrzeigerrichtung um den Punkt z dar, wenn man dem Verlauf der Kurve folgt. Eine Umrundung in Uhrzeigerrichtung ergibt eine negative Windungszahl, eine Umrundung entgegen dem Uhrzeigersinn ergibt eine positive Windungszahl. Um eine günstige Partikelabscheidung in einer Filterkammer 70, wie sie in Fig. 6 abgebildet ist, zu erreichen, sollte daher der Betrag der Windungszahl w mindestens den Wert 3 aufweisen.

Das Drallblech 100, sowie für Fig. 6 beschrieben, kann auch in den Ausführungsformen des Gasgenerators 10, wie er in den Figuren 1 bis 5 oder 8 dargestellt ist, jeweils innerhalb der dort abgebildeten Leithülse 50 positioniert sein und seine zuvor beschriebene Wirkung (Fliehkraftabscheider) zusätzlich mit einbringen.

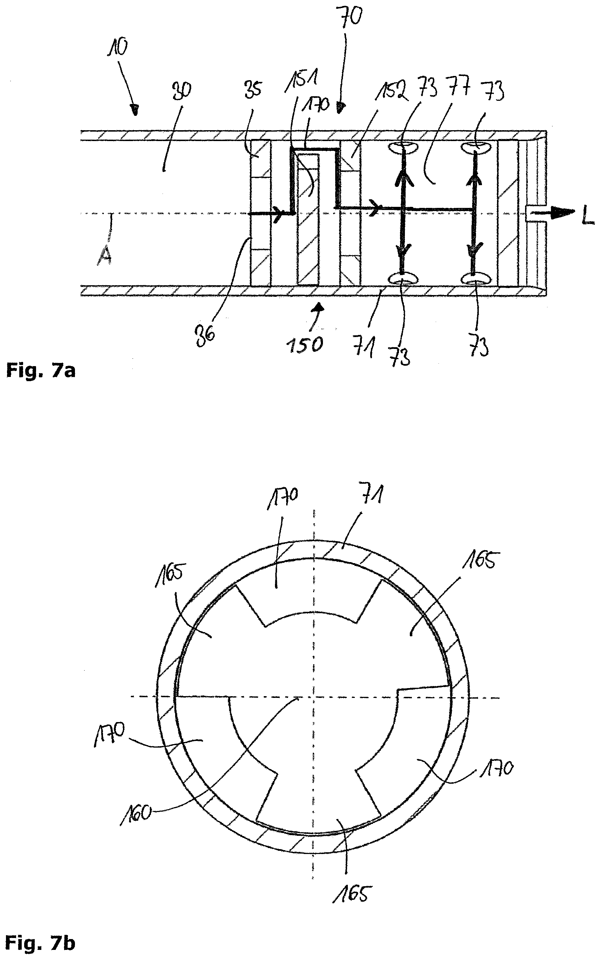

In Fig. 7 wird eine Ausführungsform eines erfindungsgemäßen Gasgenerators 10 dargestellt. Der Brennkammerausgang 36 ist als zentrale Öffnung des Brennkammerbodens 35 ausgebildet. In der Filterkammer 70 befindet sich ein Plattenlabyrinthfilter-System 150. Dieses umfasst mindestens zwei längsaxial hintereinander positionierte Platten, nämlich eine erste Platte 151 und eine zweite Platte 152. Die Platten 151 und 152 erstrecken sich senkrecht zur axialen Längsrichtung L des Gasgenerators 10. Ein in die Filterkammer 70 einströmendes Gas prallt zunächst auf die erste Platte 151.

In Fig. 7b ist die Form dieser ersten Platte 151 näher dargestellt. Die Platte 151 weist somit einen kreisrunden Abschnitt 160 mit davon seitlich abstehenden Kreissegmentabschnitten 165 auf. Zwischen den Kreissegmentabschnitten 165 werden Strömungskanäle 170 gebildet. Die Anzahl der Kreissegmentabschnitte 165 entspricht der Anzahl von ausgebildeten Strömungskanälen 170. Der Querschnitt des Brennkammerausgangs 36 des Brennkammerbodens 35 ist kleiner als der Durchmesser des kreisrunden Abschnittes 160. Somit prallt in die Filterkammer 70 einströmendes Gas zunächst auf den kreisrunden Abschnitt 160 der ersten Platte 151 um anschließend durch die Strömungskanäle 170 in Richtung der zweiten Platte 152 zu strömen.

Die zweite Platte 152 ist im Wesentlichen ringförmig ausgebildet. Der Innendurchmesser dieser Ringform ist kleiner als der Durchmesser des kreisrunden Abschnitts 160, oder anders ausgedrückt, deckt der Querschnitt der Ringfläche der zweiten Platte 152 die auf ihn in axialer Richtung projizierten Flächen der Strömungskanäle 170 ab, sodass das durch die Strömungskanäle 170 geleitete Gas an dem ringförmigen Abschnitt der zweiten Platte 152 in Richtung der mittigen Längsachse A des Gasgenerators 10 abgelenkt wird. Anschließend gelangt das Gas in den Kammerabschnitt 77 um dort durch die Filterkammeröffnungen 73 nach außen strömen zu können.

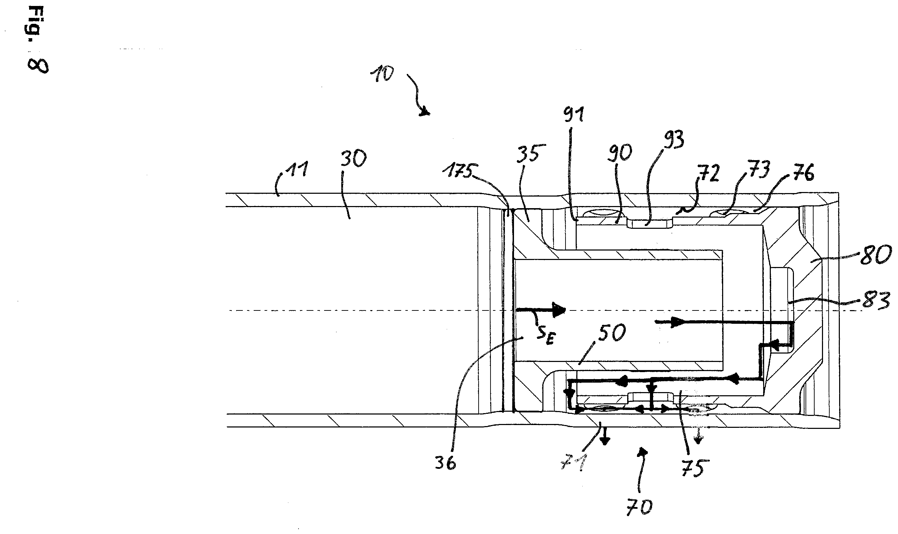

In Fig. 8 wird ein Teilbereich eines Gasgenerators 10, der vom Grundaufbau mit dem Gasgenerator 10 der Fig. 2a vergleichbar ist, dargestellt. Im Folgenden werden lediglich die wesentlichen Unterschiede hinsichtlich der Filterkammer 70 näher erläutert.

Auch in Fig. 8 wird eine Filterkammer 70 mit zwei ineinander positionierten im Wesentlichen konzentrisch angeordneten Hülsen 50 und 90 dargestellt. Jedoch ist hier die Leithülse 50 mit dem Brennkammerboden 35 als gemeinsames, einstückiges Bauteil ausgebildet. Ebenfalls ist auch die zweite Hülse 90 mit der Prallplatte 80 als ein gemeinsames, einstückiges Bauteil ausgebildet. In anderen Worten ausgedrückt, geht hier der Brennkammerboden 35, der im Wesentlichen als eine Scheibe mit einer zentralen Durchgangsöffnung, nämlich dem Brennkammerausgang 36, ausgebildet ist, einstückig über in die Leithülse 50, welche als hohlzylindrische axiale Fortsetzung des Brennkammerausgangs 36 aufgefasst werden kann. Der Brennkammerboden 35 ist somit quasi mit der Leithülse 50 "verschmolzen" und es ist dadurch ein neues einstückiges Bauteil "Brennkammerboden 35 plus Leithülse 50" ausgebildet. Auch hier kann der Brennkammerausgang 36 mit einer Verdämmung 175 im Ruhezustand des Gasgenerators 10 verschlossen werden.

Analog dazu zeigt die Fig. 8 auch, dass ebenfalls die Prallplatte 80 einstückig in die zweite Hülse 90 übergehen kann, wobei ein becherförmiges neues einstückiges Bauteil ausgebildet ist, welches als "Prallplatte 80 plus zweite Hülse 90" aufzufassen ist. Auch hier kann, analog zu der Fig. 2a, in der Prallplatte 80 eine Vertiefung 83 ausgebildet sein, welche bei Aktivierung des Gasgenerators 10 als Schlackefalle zur Ablagerung von Partikeln aus dem Gasstrom dient.

Durch die zuvor beschriebene jeweilige einstückige Ausbildung von "Brennkammerboden 35 plus Leithülse 50" und "Prallplatte 80 plus zweite Hülse 90" können, wie in Fig. 8 ersichtlich, insgesamt maximal zwei Einzelbauteile, im Vergleich zu der Konstruktion von Fig. 2a, eingespart werden.

Natürlich ist auch nur die Realisierung eines dieser beiden beschriebenen einstückigen Bauteile der Fig. 8 denkbar. In einem solchen Fall liegt also nur "Brennkammerboden 35 plus Leithülse 50" oder "Prallplatte 80 plus zweite Hülse 90" als einstückiges Bauteil vor, wobei die jeweils übrigen Bauteile als jeweilige Einzelbauteile, analog wie in Fig. 2a, ausgeführt sind.

In Fig. 8 ist der Verlauf des Gasstroms und dessen Umlenkung ebenfalls in Form von Linien mit Pfeilen exemplarisch eingezeichnet und entspricht im Prinzip dem Verlauf des Gasstroms, wie er in Fig. 2a dargestellt ist. Allerdings ergibt sich hier doch folgender bemerkenswerter Unterschied bzw. eine Besonderheit.

Wie in Fig. 8 ersichtlich, kontaktiert das brennkammerseitige Ende 91 der zweiten Hülse 90 nicht den Brennkammerboden 35 oder die Leithülse 50 bzw. liegt nicht an diesen Bauteilen an. Vielmehr ist erkennbar, dass ein deutlicher Abstand des brennkammerseitigen Endes 91 der zweiten Hülse 90 in axialer Richtung zu dem Brennkammerboden 35 und in radialer Richtung zu der Leithülse 50 gegeben ist. Somit ist hier auch ein Gasstrom um das brennkammerseitige Ende 91 der zweiten Hülse 90 herum möglich, indem der Gasstrom, wenn er sich bereits in der ersten Abströmkammer 75, entgegen der Einströmrichtung S_{E}, befindet, in einen Umlenkbereich im Bereich des brennkammerseitigen Endes 91 der zweiten Hülse 90 geleitet wird und dort im Wesentlichen um 180° in die zweite Abströmkammer umgelenkt wird.

Hierbei kann bei einer Konstruktion, wie in Fig. 8 dargestellt, die dargestellte Hülsenöffnung 93 in der zweiten Hülse 90 optional sein. In anderen Worten, der Gasstromverlauf muss nicht unbedingt zusätzlich durch eine Hülsenöffnung 93 erfolgen, sondern kann, im Falle von nicht vorhandenen Hülsenöffnungen, lediglich um das brennkammerseitige Ende 91 der zweiten Hülse 90 herum, wie zuvor beschrieben, erfolgen.

Zu den Figuren 3 bis 8 sei noch angemerkt, dass sich dort innerhalb der Brennkammer 30 auch ein Brennkammersieb 60 in Form eines Kegels bzw. eines hohlen Pyramidenstumpfes mit mehrere Brennkammersieböffnungen in axialer und radialer Richtung befinden kann, insbesondere an einer Position, wie in den Figuren 1 und 2 dargestellt, also in direkter Umgebung zu dem Brennkammerboden 35.

### Bezugszeichenliste

- 10: Gasgenerator
- 11: Außengehäuse
- 15: Innenseite
- 20: Anzündeinheit
- 21: Anzünder
- 30: Brennkammer
- 31: Festtreibstoffbett
- 32: Anzündmischung
- 33: Erster Abschnitt Brennkammer
- 34: Zweiter Abschnitt Brennkammer
- 35: Brennkammerboden
- 36: Brennkammerausgang/Öffnung
- 37: Hülsenstutzen
- 40: Füllkörperelement
- 41: Feder
- 42, 43: Stirnseitiges Abschlusselement
- 50: Leithülse
- 51: Brennkammerseitiges Ende
- 52: Befestigungsflansch
- 53: Zweites Ende
- 54: Ringabschnitt
- 55: Leithülsenöffnung
- 56: Axiale Vertiefung
- 57: Zentraler Abschnitt
- 58: Ausbuchtung
- 59: Ausbuchtungswandung
- 60: Brennkammersieb
- 61: Brennkammersieböffnungen
- 65: Langloch
- 66: Verdrehsicherungselement
- 70: Filterkammer
- 71: Filterkammeraußengehäuse
- 72: Innenseite
- 73: Filterkammeröffnung
- 75: Erste Abströmkammer
- 76: Zweite Abströmkammer
- 77: Kammerabschnitt
- 80: Prallplatte
- 81: Bodenelement
- 82: Becherartiges Stirnelement
- 83: Vertiefung
- 84: Wandung
- 90: Zweite Hülse
- 91: Brennkammerseitiges Ende
- 92: Stirnseite
- 93: Hülsenöffnung
- 94: Ringabschnitt
- 95: Hülsenwandung
- 96: Hinterschnitt
- 100: Schneckenförmiges Drallblech
- 101: Oberfläche Drallblech
- 150: Plattenlabyrinthfilter-System
- 151: Erste Platte
- 152: Zweite Platte
- 160: Kreisrunder Abschnitt
- 165: Kreissegmentabschnitt
- 170: Strömungskanal
- 175: Verdämmung
- 180: Filter
- L: Axiale Längsrichtung Gasgenerator
- A: Mittige Längsachse Gasgenerator
- M: Mittelpunkt
- S_{E}: Einströmrichtung
- T: Tangentialer Gasströmung

## Patentansprüche

1. Gasgenerator (10), insbesondere pyrotechnischer Rohrgasgenerator, mit einer axialen Längsrichtung (L), umfassend eine Anzündeinheit (20), eine der Anzündeinheit (20) axial nachgelagerte Brennkammer (30) mit einem Brennkammerboden (35) und eine der Brennkammer (30) axial nachgelagerte Filterkammer (70), wobei in der Filterkammer (70) ein Plattenlabyrinthfilter-System (150) mit mindestens zwei einander axial nachgelagert positionierten Platten (151, 152), ausgebildet ist, wobei die Platten (151, 152) im Wesentlichen senkrecht zur axialen Längsrichtung (L) des Gasgenerators (10) und im Wesentlichen parallel zum Brennkammerboden (35) ausgerichtet sind, und wobei jede der Platten (151, 152) zumindest eine Durchtrittsöffnung aufweist, wobei die Durchtrittsöffnungen zweier benachbarter Platten (151, 152) in Radialrichtung zueinander versetzt angeordnet sind,
**dadurch gekennzeichnet, dass**
der Brennkammerboden (35) einen Brennkammerausgang (36) bildet und der Brennkammerausgang (36) zumindest eine Öffnung im Brennkammerboden (35) ist, wobei zwischen einer in axialer Längsrichtung (L) ersten angeordneten Platte (151) des Plattenlabyrinthfilter-Systems (150) und einer Innenseite (72) eines Filterkammeraußengehäuses (71) mehrere Strömungskanäle (170) gebildet sind.

2. Gasgenerator (10) nach Anspruch 1,
**dadurch gekennzeichnet, dass**
die in axialer Längsrichtung (L) erste angeordnete Platte (151) des Plattenlabyrinthfilter-Systems (150) eine flügelradartige Form oder einen im Wesentlichen kreisrunden Abschnitt (160) mit davon seitlich abstehenden Kreissegmentabschnitten (165) aufweist.

3. Gasgenerator (10) nach Anspruch 2,
**dadurch gekennzeichnet, dass**
zwischen flügelartigen Abschnitten oder den Kreissegmentabschnitten (165) der ersten Platte (151), die mehrere Strömungskanäle (170) gebildet sind, die in Relation zum Brennkammerausgang (36) radial nach außen verlagert sind.

4. Gasgenerator (10) nach Anspruch 2 oder 3,
**dadurch gekennzeichnet, dass**
die Anzahl der Kreissegmentabschnitte (165) der Anzahl von ausgebildeten Strömungskanälen (170) entspricht.

5. Gasgenerator (10) nach zumindest einem der Ansprüche 2 bis 4,
**dadurch gekennzeichnet, dass**
der Querschnitt des Brennkammerausgangs (36) des Brennkammerbodens (35) kleiner als der Durchmesser des kreisrunden Abschnittes (160) ist.

6. Gasgenerator (10) nach zumindest einem der Ansprüche 2 bis 5,
**dadurch gekennzeichnet, dass**
eine zweite Platte (152) des Plattenlabyrinthfilter-Systems (150) im Wesentlichen ringförmig ausgebildet ist und der Innendurchmesser dieser Ringform kleiner ist als der Durchmesser des kreisrunden Abschnitts (160) der ersten Platte (151).

7. Gasgenerator (10) nach zumindest einem der voranstehenden Ansprüche,
**dadurch gekennzeichnet, dass**
in der Brennkammer (30) ein Brennkammersieb (60) angeordnet ist, welches der Filterkammer (70) axial, bezügliche der Längsrichtung (L) des Gasgenerators, vorgelagert ist, wobei das Brennkammersieb (60) vorzugsweise hülsenartig mit radialen Öffnungen (61) ausgebildet ist.

8. Gassackmodul mit einem Gasgenerator (10), einem von dem Gasgenerator (10) aufblasbaren Gassack und einer Befestigungseinrichtung zur Anbringung des Gassackmoduls an einem Fahrzeug, **dadurch gekennzeichnet, dass** der Gasgenerator (10) nach zumindest einem der vorhergehenden Ansprüche ausgebildet ist.

9. Fahrzeugsicherheitssystem, insbesondere zum Schutz einer Person, beispielsweise eines Fahrzeuginsassen oder Passanten, mit einem Gasgenerator (10), einem von diesem aufblasbaren Gassack, als Teil eines Gassackmoduls, und einer elektronischen Steuereinheit, mittels der der Gasgenerator (10) bei Vorliegen einer Auslösesituation aktivierbar ist, **dadurch gekennzeichnet, dass** der Gasgenerator (10) nach zumindest einem der voranstehenden Ansprüche 1 bis 7 ausgebildet ist.

## Claims

1. A gas generator (10), particularly a pyrotechnical tube gas generator with an axial longitudinal direction (L), comprising an ignition unit (20), a combustion chamber (30) mounted axially downstream of the ignition unit (20) comprising a combustion chamber bottom (35) and a filter chamber (70) that is mounted axially downstream of the combustion chamber (30), wherein in the filter chamber (70) a plate labyrinth filter system (150) including at least two plates (151, 152) positioned axially downstream of each other is formed, wherein the plates (151, 152) are aligned substantially perpendicularly to the axial longitudinal direction (L) of the gas generator (10) and substantially in parallel to the combustion chamber bottom (35), and wherein each of the plates (151, 152) has at least one through-opening, the through-openings of two adjacent plates (151, 152) being arranged to be offset against each other in the radial direction,
**characterized in that**
the combustion chamber bottom (35) forms a combustion chamber outlet (36) and the combustion chamber outlet (36) is at least one opening in the combustion chamber bottom (35), wherein plural flow passages (170) are formed between a first plate (151) arranged in axial longitudinal direction (L) of the plate labyrinth filter system (150) and an inner face (72) of a filter chamber outer casing (71).

2. The gas generator (10) according to claim 1,
**characterized in that**
the plate (151) of the plate labyrinth filter system (150) arranged to be first in the axial longitudinal direction (L) is vane-shaped or has a substantially circular portion (160) with circular segment portions (165) projecting laterally therefrom.

3. The gas generator (10) according to claim 2,
**characterized in that**
between the vane-type portions or the circular segment portions (165) of the first plate (151) the plural flow passages (170) are formed which are displaced radially outwardly in relation to the combustion chamber outlet (36).

4. The generator (10) according to claim 2 or 3,
**characterized in that**
the number of circular segment portions (165) corresponds to the number of flow passages (170) formed.

5. The gas generator (10) according to at least one of the claims 2 to 4,
**characterized in that**
the cross-section of the combustion chamber outlet (36) of the combustion chamber bottom (35) is smaller than the diameter of the circular portion (160).

6. The gas generator (10) according to at least one of the claims 2 to 5,
**characterized in that**
a second plate (152) of the plate labyrinth filter system (150) is substantially ring-shaped and the inner diameter of said ring shape is smaller than the diameter of the circular portion (160) of the first plate (151).

7. The gas generator (10) according to at least one of the preceding claims,
**characterized in that**
in the combustion chamber (30) a combustion chamber screen (60) is arranged which is mounted axially upstream, with respect to the longitudinal direction (L) of the gas generator, of the filter chamber (70), the combustion chamber screen (60) being preferably in the form of a sleeve having radial openings (61).

8. An airbag module comprising a gas generator (10), an airbag inflatable by the gas generator (10) and a fastening device for attaching the airbag module to a vehicle, **characterized in that** the gas generator (10) is configured according to at least one of the preceding claims.

9. A vehicle safety system, especially for protecting a person such as a vehicle occupant or a pedestrian comprising a gas generator (10), an airbag inflatable by the latter as part of an airbag module, and an electronic control unit by means of which the gas generator (10) can be activated when a release situation is given, **characterized in that** the gas generator (10) is configured according to at least one of the preceding claims 1 to 7.

## Revendications

1. Générateur de gaz (10), en particulier générateur de gaz tubulaire pyrotechnique, à direction longitudinale axiale (L), comprenant une unité d'allumage (20), une chambre de combustion (30) axialement en aval de l'unité d'allumage (20) avec un fond de chambre de combustion (35) et une chambre de filtration (70) axialement en aval de la chambre de combustion (30), pour lequel dans la chambre de filtration (70) est formé un système de filtre à labyrinthe à plaques (150) avec au moins deux plaques (151, 152) positionnées axialement en aval dans la chambre de filtration (70), pour lequel les plaques (151, 152) sont orientées sensiblement perpendiculaires à la direction longitudinale axiale (L) du générateur de gaz (10) et sensiblement parallèles au fond de la chambre de combustion (35), et pour lequel chacune des plaques (151, 152) possède au moins une ouverture de passage, pour lequel les ouvertures de passage de deux plaques adjacentes (151, 152) sont disposées décalées dans la direction radiale,
**caractérisé en ce que**
le fond de chambre de combustion (35) forme une sortie de la chambre de combustion (36) et la sortie de chambre de combustion (36) est au moins une ouverture dans le fond de chambre de combustion (35), pour lequel entre une plaque (151) axialement en direction longitudinale (L) du système de filtre à labyrinthe à plaques (150) et une face interne (72) d'un corps de chambre de filtration (71) sont disposés une pluralité de canaux d'écoulement (170).

2. Générateur de gaz (10) selon la revendication 1,
**caractérisé en ce que**
la première plaque (151) axialement en direction longitudinale (L) du système de filtre à labyrinthe à plaques (150) a une forme en forme d'ailette ou une section essentiellement circulaire (160) avec des sections de segments circulaires (165) dépassant latéralement.

3. Générateur de gaz (10) selon la revendication 2,
**caractérisé en ce que**
entre les sections en forme d'ailette ou les sections de segments circulaires (165) de la première plaque (151), est formée une pluralité de canaux d'écoulement (170) qui sont disposés radialement vers l'extérieur par rapport à la sortie de la chambre de combustion (36).

4. Générateur de gaz (10) selon la revendication 2 ou 3,
**caractérisé en ce que**
le nombre de sections de segments circulaires (165) correspond au nombre de canaux d'écoulement (170) formés.

5. Générateur de gaz (10) selon au moins l'une des revendications 2 à 4,
**caractérisé en ce que**
la section transversale de la sortie de chambre de combustion (36) du fond de chambre de combustion (35) est inférieure au diamètre de la section circulaire (160).

6. Générateur de gaz (10) selon au moins l'une des revendications 2 à 5,
**caractérisé en ce que**
une seconde plaque (152) du système de filtre à labyrinthe à plaques (150) est essentiellement annulaire et le diamètre intérieur de cette forme annulaire est inférieur au diamètre de la section circulaire (160) de la première plaque (151).

7. Générateur de gaz (10) selon au moins l'une des revendications précédentes,
**caractérisé en ce que**
un filtre de chambre de combustion (60) est disposé dans la chambre de combustion (30) et est axialement en amont de la chambre de filtre (70) par rapport à la direction longitudinale (L) du générateur de gaz, l'écran de chambre de combustion (60) étant de préférence conçu comme un manchon à ouvertures radiales (61).

8. Module airbag avec un générateur de gaz (10), un sac gonflable qui peut être gonflé par un générateur de gaz (10) et un dispositif de fixation pour la fixation du module airbag sur un véhicule, **caractérisé en ce que** le générateur de gaz (10) est conçu selon au moins l'une des revendications précédentes.

9. Système de sécurité du véhicule, notamment pour protéger une personne, par exemple un occupant d'un véhicule ou des piétons, avec un générateur de gaz (10), un coussin gonflable qui peut être gonflé par celui-ci, faisant partie d'un module airbag, et une unité de commande électronique au moyen de laquelle le générateur de gaz (10) peut être activé qui se déclenche lorsqu'une situation de déclenchement se produit, **caractérisé en ce que** le générateur de gaz (10) est conçu selon au moins l'une des revendications 1 à 7 précédentes.
